(19) **Europäisches Patentamt**

**European Patent Office**

**Office européen des brevets**

(11)  **EP 0 470 181 B1**

(12)  # EUROPEAN PATENT SPECIFICATION

(45) Date of publication and mention
of the grant of the patent:
**28.02.1996 Bulletin 1996/09**

(21) Application number: **90907836.2**

(22) Date of filing: **30.03.1990**

(51) Int. Cl.⁶: **B29B 7/74**

(86) International application number: **PCT/US90/01691**

(87) International publication number: **WO 90/12650**
**(01.11.1990 Gazette 1990/25)**

(54) **MULTI-COMPONENT SPRAYING SYSTEM**

SPRITZSYSTEM MIT MEHREREN BESTANDTEILEN

SYSTEME DE VAPORISATION A PLUSIEURS COMPOSANTS

(84) Designated Contracting States:
**DE ES FR GB IT**

(30) Priority: **24.04.1989 US 342185**

(43) Date of publication of application:
**12.02.1992 Bulletin 1992/07**

(73) Proprietor: **GLASCRAFT, INC.**
**Indianapolis, IN 46278 (US)**

(72) Inventors:
 • **KUKESH, Timothy, S.**
  **Indianapolis, IN 46214 (US)**
 • **MANSFIELD, Gregory**
  **Zionsville, IN 46077 (US)**

(74) Representative: **Crawford, Andrew Birkby et al**
**London WC1V 7LE (GB)**

(56) References cited:
**DE-A- 2 705 642**     **DE-B- 1 251 190**
**FR-A- 2 350 887**     **FR-A- 2 532 560**
**US-A- 2 152 046**     **US-A- 2 646 314**
**US-A- 3 129 926**     **US-A- 3 252 657**
**US-A- 4 083 493**     **US-A- 4 281 683**
**US-A- 4 325 513**     **US-A- 4 407 454**
**US-A- 4 549 676**     **US-A- 4 618 098**
**US-A- 4 745 011**     **US-A- 4 760 956**
**US-A- 4 767 057**     **US-A- 4 824 017**

EP 0 470 181 B1

Printed by Rank Xerox (UK) Business Services
2.9.9/3.4

## Description

Background Art

The present invention relates generally to multi-component spraying systems and, more particularly, to air-assisted, airless-atomization, plural component spraying systems and methods.

Multi-component spraying systems have been used, for example, in manufacturing plastic articles by applying resinous materials to a mold or preform for an article. In such systems, a liquid resin and a catalyst for the resin are formed into spray particles directed to a substrate where the catalyst and resin react and harden to form the article. In such applications, the resin and catalyst components are preferably mixed together; and the mixture is sprayed onto the substrate. For example, in manufacturing articles with polyester resin, a catalyzing agent for the polyester resin is mixed with the resin; and the resin-catalyst mixture is applied to the substrate. In internal mix systems, the resin and catalyst are mixed within the spraying apparatus; and the mixture is atomised by a spray nozzle and directed onto the substrate. In external mix systems, the resin and catalyst are mixed externally of the apparatus after the resin and catalyst have been atomized. In both external mix and internal mix systems, complete and thorough mixing of the resin and catalyst is important to avoid non-uniform hardening of the resin on the substrate and other undesirable results. Multi-component materials have also been used, for example, in the manufacture of insulating foams by mixing and spraying the components of a foam-producing combination onto a substrate where they produce a hardened foam-like coating. More recently, multi-component painting systems have been developed that include plural components that react, when mixed, to form hardened decorative and protective coatings. Multi-component spraying systems have thus a multiplicity of applications, each with its specific requirements.

In many spraying systems, large quantities of pressurized air are used to atomize the liquid components. Such systems are expensive to operate and have a number of operational inadequacies. It is expensive to compress air, and the large quantities of compressed air used by existing systems impose a significant operating cost on the system. In addition, the blast of compressed air used to atomize the liquid components carries a significant quantity of spray particles away from the substrate, wastes the expensive material, creates an unclean spray area and generally requires overspray collection systems and contributes to the problem of operating such manufacturing operations safely. Furthermore, the use of large quantities of air during operation of the system can often create an undesirable spread of fumes.

In order to overcome some of the inadequacies attending the use of pressurized air to atomize components dispensed from a spraying apparatus, spraying systems have been developed which incorporate airless atomization techniques.

In prior airless atomization devices, an airless spray nozzle has been used to atomize liquid materials which are pumped at high pressure, that is, pressures generally exceeding $3.4 \times 10^6$ - $4.1 \times 10^6$ N/m$^2$ (500-600 psi) and more frequently in excess of $5.5 \times 10^6$ N/m$^2$ (800 psi), typical operating pressure being $6.9 \times 10^6$ - $10.3 \times 10^6$ N/m$^2$ (1000-1500 psi). The most commonly used airless nozzle includes an internal, hemispherical passage termination which is cut through by an external, V-shaped groove to form an elongated, elliptical-like orifice. Liquid material pumped at high pressures through such a spray nozzle is forced by the hemispherical termination of the passageway to converge in its flow at and through the elongated orifice. Because of the converging flow at the orifice, the liquid material is expelled through the orifice into a planar, expanding, fan-like film which breaks into spray particles which are carried by their momentum to the article target.

With viscous fluids, high pressures of $6.9 \times 10^6$ - $10.3 \times 10^6$ N/m$^2$ (1000-1500 psi) are required. Such high operating pressures impose a strain on system components reducing their reliability, require generally expensive components in the fluid delivery systems and contribute to the problem of operating such systems safely. Even at high pressures, however, such fan-like films, because they are formed by the convergence of the fluid, include heavy streams at the edges of the planar, fan-like film, which are referred to as "tails". Because of the heavy streamlike flow in the tails, the spray pattern formed by these edge portions of the expanding, fan-like film includes a disproportionate quantity of material and produces a non-uniform deposit with stripes when the spray pattern is swept across a substrate by a spray gun operator. The non-uniform deposit and resulting stripes make the blending of deposited material into a film of uniform thickness virtually impossible.

Past efforts to solve the problem of the tails attending the use of airless spray nozzles have included the insertion of a "preorifice" immediately behind the elongated, elliptical-shaped orifice to concentrate a greater portion of the flow in the central portion of the fan. Although preorifices are helpful, they are not completely satisfactory, adding another source of clogging to the spray gun and another variable factor to be integrated into system operation.

Compressed air has also been used to solve the problem of tails created by airless spray nozzles. See, for example, U.S. Patent Nos. 3,202,363; 3,521,824; 3,635,400; 3,843,052; and 4,386,739 and Japanese patent publication No. 57-90762. In plural component spraying systems, compressed air has been used to assist in the atomization of plural component materials as shown, for example, in U.S. Patent Nos. 2,780,496; 2,864,653; 3,799,403; and 4,618,098 and British patent specification No. 735,983.

External mix plural component systems originally included a plurality of separated spray gun or spray nozzles that were directed to blend their patterns together and to mix thereby resins and their catalysts or hardening agents. See, for example, U.S. Patent Nos. Des. 252,097; 3,893,621; 4,123,007; 4,618,098; and 4,713,257.

In prior art external mix, plural component spraying systems using airless resin nozzles, catalyst spray has been injected into the resin spray formed from an airless spray nozzle at distances of the order of 25.4 mm (one inch) or more in front of the airless spray nozzle. This downstream location for insertion of the catalyst spray provided mixing of the catalyst spray particles with resin spray particles which had already been formed from the liquid resin at this location. In such prior plural component systems, resin spray particles are formed within a fraction of an inch of the airless spray nozzle, either under the influence of high hydraulic resin pressures, typically of the order of $6.9 \times 10^6$ N/m$^2$ (1000 psi), or the combined action of lower hydraulic resin pressures and a plurality of compressed air jets located adjacent the airless resin nozzle and directed at the expanding fan-like resin film directly adjacent the liquid orifice of the resin nozzle. Introduction of the catalyst to the spray more than 25.4 mm (one inch) downstream of the liquid orifice was to avoid the collection of catalyst on the resin nozzle, among other things. An accumulation of catalyst on the resin nozzle will combine with resin at the resin nozzle orifice and cure the resin, blocking the resin nozzle orifice and requiring removal of the resin nozzle for cleaning or replacement.

In such prior external mix systems, a substantial flow of air accompanied the rapidly moving resin particles at the downstream location of catalyst injection; and this substantial flow of air was transverse to the direction of the catalyst spray being injected into the spray pattern and made it difficult to inject catalyst particles uniformly into the resin spray. In addition, in such prior external mix systems, the catalyst particles were injected by the associated apparatus into a flow of compressed air that was directed to blow the catalyst particles into and mix them with the resin spray particles. The flows of air accompanying the formation of the resin particles and used to blow the catalyst particles into the resin spray produced uncontrolled billowing air movements which prevented the fine catalyst particles from being incorporated into the spray pattern and being mixed with the resin particles and deposited on the substrate. Importantly, the air flows associated with such prior external mix systems led to the escape of fine catalyst particles into the surrounding environment, thus presenting cleaning problems and requiring air removal systems.

Furthermore, in such prior external mix systems, it was difficult to obtain desirable spray patterns. The use of the plurality of compressed air jets to assist in atomization of the expanding resin film directly adjacent the liquid orifice of the airless nozzle, where the film had substantial integrity, resulted in a deflection of a portion of this compressed air and contributed to the uncontrolled billowing. This was especially true in systems in which the compressed air jets were directed against the airless nozzle itself. The focus of the compressed air jets at the airless resin nozzle to assist atomization of the resin film made it difficult to form resin and catalyst particles into a desirable spray pattern. Furthermore, because of the direction and force required of the compressed air to carry the catalyst particles into the resin spray more than 25.4 mm (one inch) in front of the resin nozzle and to achieve mixing of the catalyst particles with resin particles substantially downstream of the resin nozzle, the compressed air used to entrain the catalyst particles was not effectively used to provide a satisfactory spray pattern.

Moreover, plural components spraying methods and apparatus have been encumbered by the use of large spray guns attached to a plurality of hoses. Such guns were heavy, and their manipulation was resisted by a plurality of hoses attached at various locations to the spray gun body. While the weight and dimensions and the inability to manipulate, by twisting and turning, the spray guns was no more than an inconvenience in the application of plural component materials to such large items as boats, shower stalls, roofs and the like, which are characterized by very large, relatively planar surfaces, they limited the applicability of the prior plural component spraying systems and apparatus to industrial painting applications in which a workman must frequently twist and turn the gun in all directions while holding it at arms length, and must frequently insert it into cavities and recesses formed in manufactured objects. These prior plural component systems and apparatus were, at least, commercially unattractive for industrial painting applications and, in many cases, unusable.

Both Fr-A-2532560 and DE-A-2705642 disclose a spraying system for forming a coating, including a source of coating material spraying means for directing coating material at an article liquid delivery means for providing a flow of said coating material from said source to said spraying means and air delivery means for providing a flow of compressed air to said spraying means said spraying means including an airless liquid nozzle for forming the coating material into a fan-like liquid film with edges expanding from a liquid orifice, and an air nozzle assembly for directing compressed air to impinge on the fan-like film of coating material and assist in the formation of a particle spray.

The present invention is characterized in that said air nozzle directs a first flow of compressed air which impinges on the fan-like film of coating material closely adjacent the liquid nozzle and directs second flows of compressed air which impinge on the edges of the film downstream of the impingement of the first flow of compressed air, said first and second flows of compressed air interacting with the fan-like film of coating material to assist atomization and capture particles of the particle spray.

The invention includes method and apparatus providing effective and efficient mixing, atomization and deposition of plural component materials that is desirable not only in such plural component spraying applications as gel coat application in the manufacture of reinforced fiberglass articles but also to industrial painting applications. The method and apparatus of the invention provide a compact, well defined and easily used spray pattern with substantial containment of the plural component materials and reduced contamination of the work environment, an inexpensive, lightweight, easy-to-maneuver spray gun and a plural component spray system.

In one preferred method of the invention, connections for the plural component materials are adapted to be supported and carried on a workman's body, and the plurality of components of the plural component material flow to, and are combined at the connections supported and carried by the workman's body. The combined flow of the plural components is supplied from the connections supported and carried by the workman's body through a single flexible conduit to a spray gun for spraying on a substrate or article of manufacture. In preferred such methods, the combined flow of the plural components is further mixed and is preferably further mixed in the single flexible conduit leading from the connections on the workman's body to the spray gun. Preferred such methods also include cleansing of the apparatus of the mixed plural component material by providing a flow of solvent to one of the connections supported and carried by the workman's body, and providing a valve supported and carried by the workman's body and operable by the workman's hand, to interconnect, as desired the connections for the plural component material, or the connection for the solvent, to the output connection. In such methods, the valve is operated to place it in a first position in which the flow of solvent is blocked and the flows of the first and second components of the plural component material are permitted to flow through the connections and check valves to be combined in the valve and directed in a combined flow from the valve output connection, or in a second position in which the flows of the plural components are blocked and a flow of solvent is permitted through the connections and check valves and the valve and is directed by the valve through the valve output connection, the single flexible conduit and the spray gun.

In a preferred spraying method of the invention, the combined flows of the plural component materials are mixed and formed into the fan-like film. The first flow of compressed air, having a greater width than depth, is directed to intersect the fan-like film of plural component materials within a fraction of 25.4 mm (one inch) of the spray gun to assist in the formation of a particle spray. The spray particles of mixed plural component materials are substantially confined in a spray pattern of reduced size that is directed at a substrate where the plural component materials form a coating.

The method and apparatus of the invention include a plural component supply means adapted to be supported and carried by the body of a workman. Such a means comprises a first connection adapted to receive a flow of one component of a plural component material, a second connection adapted to receive a flow of a second component of a plural component material and a third connection adapted to provide a combined output of the first and second components of the plural component material, all carried by means for attaching plural component supply means to the clothing of a workman, and preferably for attachment to a workman's belt. Such a plural component supply means preferably further comprises a fourth connection adapted to receive a flow of solvent and a valve connected with the first and second plural component connections, solvent connection and the third, or output, connection. The valve has a first position interconnecting the plural component material connections and the output connections while blocking the solvent connection, to permit a flow of combined plural component materials for spraying and a second position, blocking the plural component material connections and connecting the solvent connection to the output connection, to permit a flow of cleansing solvent through the output connection and remainder of the system.

The invention further includes novel valve comprising a valve body and a movable valve member that is carried within a cavity of the valve body and is movable between the first and second positions. The valve body has a first passageway leading from a first connection for fluid material to a first internal opening at the cavity of the valve body. A second passageway of the valve body leads from a second connection for fluid material to a second internal opening at the cavity of the valve body. A third passageway of the valve body leads from a third connection to a third opening at the cavity of the valve body, and a fourth passageway leads from a fourth connection to a fourth opening of the cavity at the valve body. The movable valve member is provided with a first valve passageway leading from the surface of the movable valve body to an internal passageway junction; a second valve passageway leading from the surface of the movable valve body to the internal passageway junction; and a third valve passageway leading from the surface of the movable valve body to the internal passageway junction. The passageways of the valve body and the movable valve member are so located at the surface forming the cavity of the valve body and the surface of the movable valve member that at the first position of the movable valve member, the first valve passageway is aligned with the first passageway of the valve body, the second valve passageway is aligned with the second passageway of the valve body and the third valve passageway is aligned with the third passageway of the valve body, thereby permitting fluid flow through the first and second passageways of the valve body and valve member to combine at the internal passageway junction of the movable valve member and to flow through the third passageways of the valve member and valve body to the third, or output, connection. In the second position of the movable valve member, either one of the first or second valve passageways to the valve member may be aligned with the fourth passageway of the valve body, the other of the first and second valve passageways being blocked by the cavity wall of the valve body, and the third passageway of the valve body is aligned with the third valve passageway thereby permitting fluid to flow through the fourth passageway of the valve body and one of the first and second valve passageways to the internal passageway junction and to flow through the third passageways of the valve member and valve body. Such a valve of this invention is preferably a ball valve that is rotatable between the first and second positions about the central axis of the third valve passageway. With such a preferred ball valve, the first and second valve passageways of the ball valve member share the same central passageway axis and form a "T" with the third valve passageway at the internal passageway junction of the ball valve member. Such a valve body is particularly adapted to be carried by a spray gun body with the third, or output, connection in communication with a fluid passageway of the spray gun. On such a spray gun, a small actuator can be connected to the movable valve member where it can be easily operated by a workman who selects spraying operations in which plural component materials connected to the valve flow through and are combined in the valve and are directed into the spray gun body, or cleaning operations in which the flow of plural component material is blocked and the flow of cleansing solvent connected to the valve body is directed through the valve and through the spray gun body. The valve is preferably adapted to be carried at the bottom of the handle of the spray gun and further adapted so that the connections for the plural component materials and solvent provide closely spaced hose connections that extend in a convenient direction.

The plural component spraying system of the invention thus comprises a first source of a first component of plural component material; a second source of a second component of a plural component material and means adapted to be supported and carried by the body of a workman, including a first connection adapted to receive a flow of the first component from the first source; a second connection adapted to receive a flow of the second component from the second source; and an output connection adapted to provide a combined flow of first and second components of the plural component material, and a hand spray gun adapted for connection to the output connection and for atomization and deposition of mixed plural component material.

In the preferred system a source of compressed air is provided and the spray gun is adapted for connection to the source of compressed air. The spray gun includes an airless liquid nozzle for forming the mixed plural component material into a fan-like film with edges extending from a liquid orifice and a nozzle assembly for directing a first flow of compressed air at the fan-like film and for further directing a second flow of compressed air downstream of the impingement of the first flow of compressed air so that the flows of compressed air interact with the mixed plural component material to assist in atomization and capture the particles of the mixture within the spray pattern. As indicated above, the system of the invention permits a plural component supply means supported and carried by the workman to be connected to the spray gun by a single flexible hose which can incorporate further mixing means for the combined flow of the plural component materials. A rotatable coupling can be provided between the single flexible hose and the handle of the spray gun to provide further ease in the manipulation of the spray gun. The plural component supply means supported and carried by the workman can be adapted for attachment to a workman's belt and can include a connection adapted to receive a flow of solvent from a source of solvent for the mixed plural component materials. In such a system, the plural component supply means can include the novel described above.

In such a preferred system of the invention, a flow of compressed air is directed at the planar surfaces of an expanding film of mixed plural component material from the opposite sides thereof to impinge upon the expanding film a fraction of an inch forwardly of the liquid orifice and a pair of compressed air flows is directed forwardly and generally parallel to each other and to the spray axis to impinge upon the expanding sides of the film forwardly of the impingement of the compressed air on the expanding liquid film. Surprisingly, when compressed air is directed at the expanding edges of the fan-shaped plural component film downstream of the impingement of the compressed air upon the expanding liquid film, the uncontrolled billowing flow of air and escaping particles are eliminated. In addition, spray pattern size is reduced; and an improvement in spray pattern uniformity results without the creation of escaping atomized plural component particles that have characterized prior air-assist, airless atomizing systems. The coaction of the flows of compressed air in the invention results in the capture of the plural component particles within the spray pattern.

The invention further permits more complete and effective atomization of the mixed plural component materials at liquid pressures and air volumes substantially lower than those commonly used in the prior art. Systems incorporated into the present invention, for example, may effectively operate with liquid pressures as low as $2.1 \times 10^6$ - $3.4 \times 10^6$ N/m² (300-500 psi).

The invention thus permits an inexpensive, easily used painting system for plural component paints with minimal contamination of the workplace environment during its operation. Further advantages and specific details of the invention will be set forth hereafter in conjunction with the drawings and detailed description of the best modes of the invention.

Brief Description of the Drawings

Fig. 1 is a perspective drawing of a system of the invention;

Fig. 2 schematically illustrates the system of the invention shown in Fig. 1;

Fig. 3 is an exploded view of a preferred plural component supply means of the invention;

Figs. 4A and 4B are cut-away views of the preferred plural component supply means of Fig. 3 to show a preferred valve of this invention;

Fig. 5 is an exploded view of a preferred spray gun for use in gel coat and paint spraying operations;

Fig. 6 is a cross-sectional view of the forward portion of the spray gun of Fig. 5 taken at a vertical plane through its center;

Fig. 7 schematically illustrates an internal mix, air-assisted, plural component system of this invention;

Fig. 8 is a side view, partially broken away, of the spraying means of the system of Fig. 7;

Fig. 9 is a top view of the spray gun body of Fig. 8 partially in section;

Fig. 10 is a cross-sectional view of the head portion of the embodiment of Figs. 8 and 9 taken at a vertical plane through its center;

Figs. 11A and 11B are two orthogonal views of the nozzle assembly of Figs. 5, 6, 7 and 10; and

Fig. 12 is a front view of the nozzle assembly of Figs. 11A and 11B.

## Description of Best Mode of the Invention

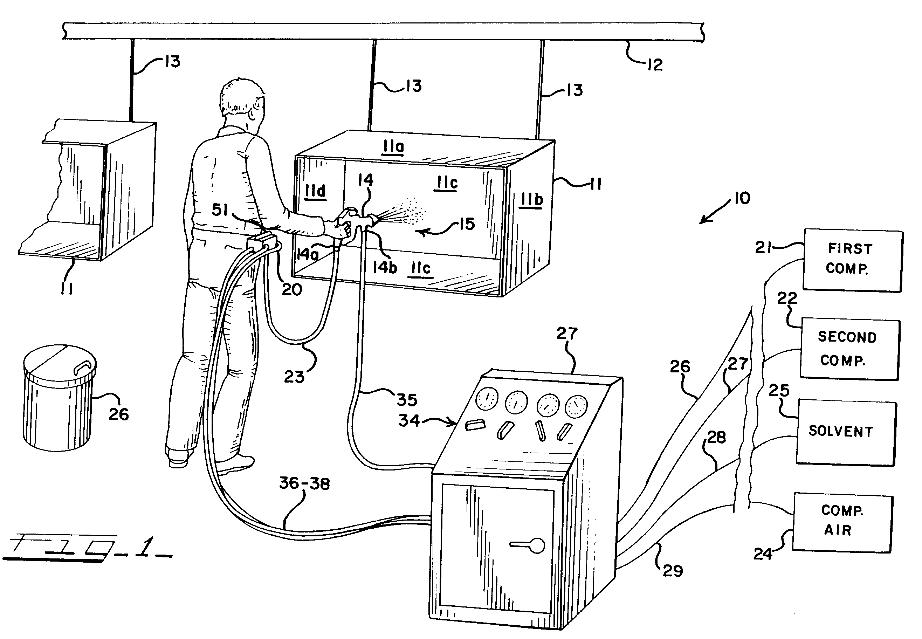

Fig. 1 is a perspective drawing of a system 10 of the invention. In Fig. 1, a workman is shown spraying the interior of a metal box 11 with mixed plural component painting material. As is typical in industrial painting applications, the metal box 11 is supported from an overhead conveyor 12 by a plurality of work holders 13 and carried past the workstation of the workman. As shown in Fig. 1, a plurality of such articles are generally carried in succession past the workstation by the overhead conveyor.

To satisfactorily coat an article such as metal box 11, it is necessary for the workman to manipulate the spray gun 14 to direct the spray pattern 15 at the inside surfaces of the box panels 11a-11e. For example, to coat the underside of panel 11a, it is necessary for the workman to twist and turn the spray gun 15 so that the spray pattern 15 is directed at and impinges on the under side of panel 11a. In like manner, the workman must also turn the spray gun to direct the spray pattern 15 at the insides of panels 11b and 11d and 11c. In order to economically coat the article 11, it is necessary that the workman coat the surfaces of the article with the thinnest sufficient coating material to cover the substrate with a uniform film. This requires the workman to manipulate the spray gun 14 easily in order that successive passes of the spray pattern 15 blend together and form a thin, uniform, coherent coating.

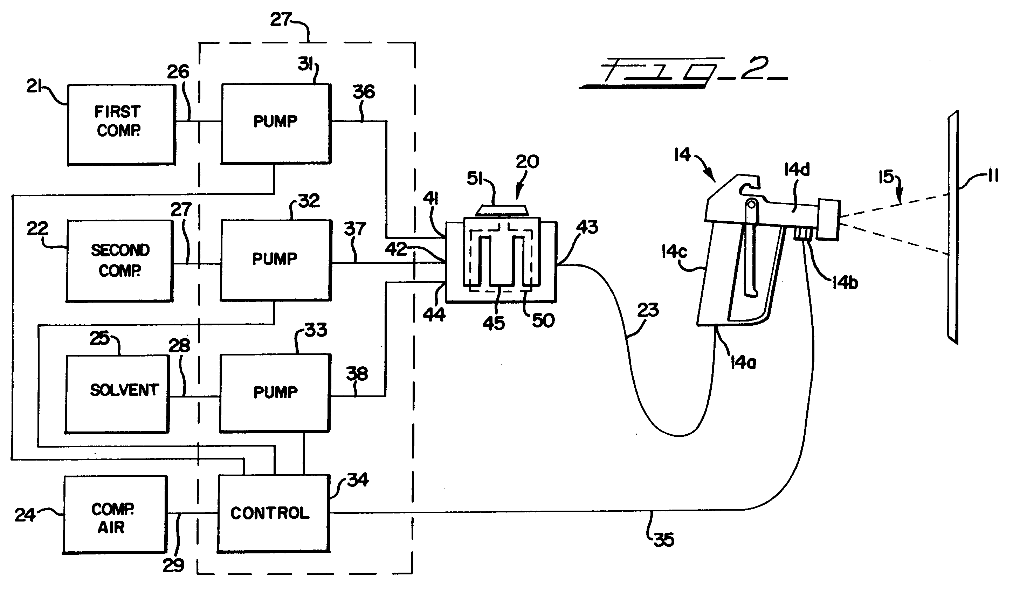

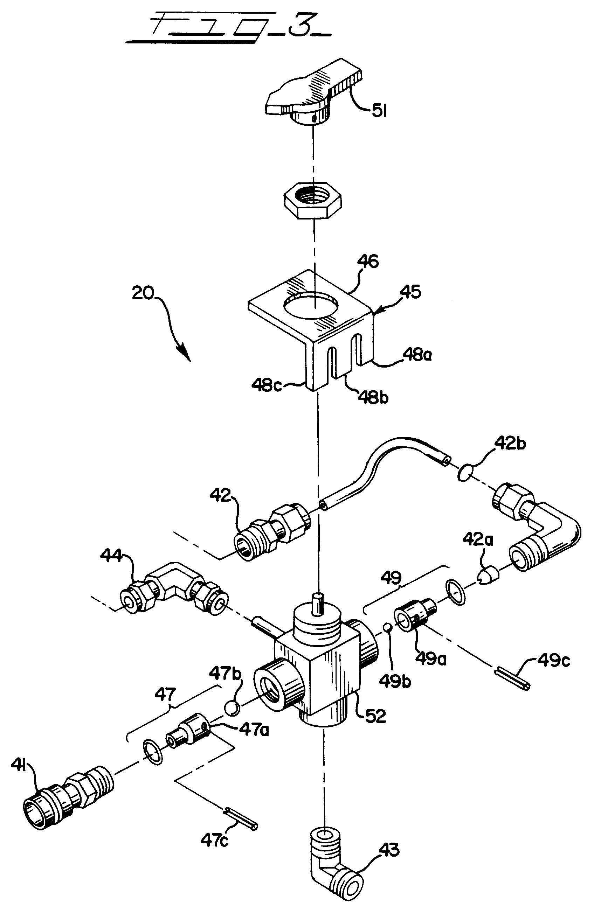

To permit such facility of operation in a plural component system, the system of the invention 10 includes a plural component supply means 20 adapted to be supported and carried on the body of a workman. As shown in Fig. 1, the plural component supply means 20 is preferably adapted for attachment to the workman's clothing and, more preferably, to the workman's belt. The plural component spraying system 10 includes a first source 21 of a first component of a plural component coating material and a second source 22 of a second component of a plural component coating material. The means 20 includes first and second connections (41, 42 - Figs. 2 and 3) adapted to receive flows of the first and second components of the plural component material from the first and second sources 21 and 22, respectively. The means 20 is adapted to provide a combined flow of the first and second components of the plural component material for direction to the spray gun 14. As shown in Fig. 1, the combined flow of plural component material is directed from means 20 through a single, flexible hose 23 to a connection 14a at the base of the handle of spray gun 14. Flexible hose 23 should be as short as possible to conserve cleansing time and material, but must be long enough to provide ease of manipulation; a hose length of 1.05 m (3.5 feet) provides a satisfactory compromise. Connection 14a may be provided with a rotating coupling within between the spray gun 14 and the hose 23 so that the spray gun 14 may be more easily manipulated by the workman.

The preferred system 10 of the invention further comprises a source of compressed air 24 and the spray gun 14 is adapted at 14b for connection with the source of compressed air 24. As will be further shown and described, the spray gun 14 includes an airless liquid nozzle for forming the mixed plural component material into a fan-like film with edges expanding from a liquid orifice and a nozzle for directing a first flow of compressed air at the fan-like film and for further directing a second flow of compressed air downstream the impingement of the first flow of compressed air on the fan-like film so that said flows of compressed air interact with the mixed plural component material to assist in the atomization of and capture the particles of the mixture in the spray pattern 15.

While the flows of the first component and the second component of the plural component material are combined by the plural component spray means 20, mixing means for the combined flow of the first and second components may be incorporated into the system downstream of means 20, preferably in flexible hose 23.

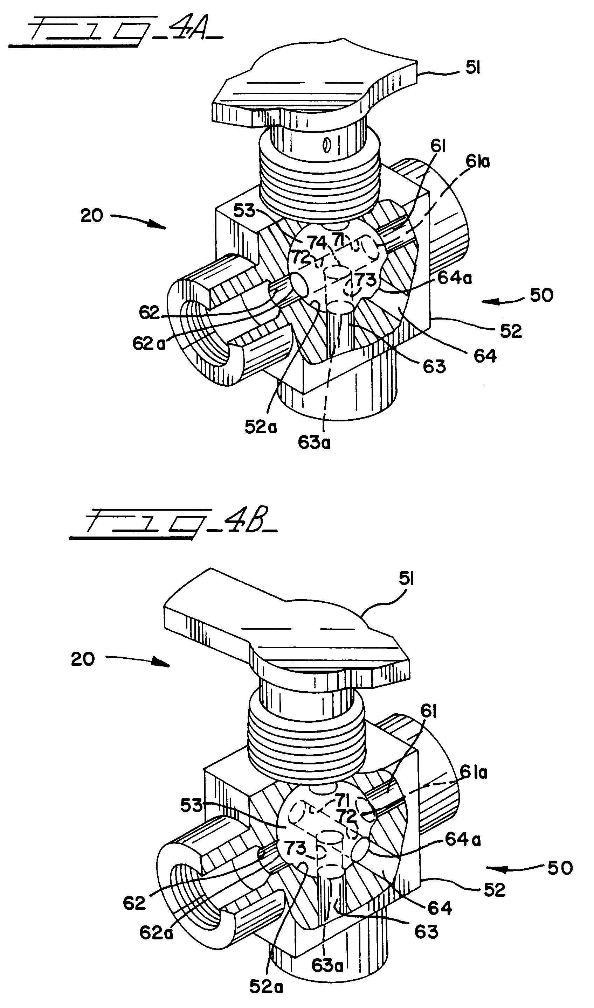

The preferred system 10 of the invention shown in Fig. 1 further comprises a source of solvent 25 and the plural component supply means 20 includes a connection adapted to receive a flow of such solvent. As shown and described below [Figs. 2 and 4), means 20 preferably includes a valve connected with the connections for the first and second components of the plural component coating material, the connection for the solvent and the output for the single flexible hose 23. The valve of the plural component supply means 20 has a first position, interconnecting the flows of the first and second components with the output for flexible hose 23 and blocking the connection for the solvent, thereby permitting a flow of combined first and second components through the output for flexible hose 23, the spray gun 14 for deposition on the article. The valve further includes a second position blocking the flow of the plural component materials and connecting the connection for the solvent to the output connection for the flexible hose 23, permitting a flow of solvent through the valve, the flexible hose 23 and the spray gun 14 to permit removal of combined first and second components of the plural component material from the system. During operation of the system with the valve in the second position, the solvent and the plural component materials removed from the gun can be directed into a waste container 26 of a type approved for use within a spraying area by the workman.

As shown in Fig. 1, a preferred system of the invention also includes means 27 providing a plurality of individually controllable pumps for the first and second components of the plural component material and for the cleansing solvent and a plurality of controls for the pumps. In addition, if desired the apparatus 27 can include a pressure regulator for the compressed air directed to spray gun 14 and suitable dryers and other such apparatus commonly used in compressed air spraying systems.

Fig. 2 is a schematic drawing illustrating the system of the invention shown in Fig. 1. As shown in Fig. 2, the apparatus 27 can include a plurality of pumps driven by compressed air, which are controlled by controls of the apparatus. For example, an air-driven pump 31 can provide a flow of the first component of the plural component material to a first connection 41 of means 20, a second air-driven pump 32 can provide a flow of the second component of the plural component material to a second connection 42 of the means 20. A third connection 43 of means 20 can provide an output for the single flexible hose 23 leading to spray gun 14. A third air-driven pump 33 can deliver a flow of solvent to a fourth connection 44 of the means 20. Apparatus 27 can be provided with a control 34 which can include a pressure and flow regulator for each of the pumps 31, 32 and 33 so that each of the pumps 31, 32 and 33 may provide different rates of flow for the different fluids of the plural component system. Control 34 can also provide a pressure regulator to control the flow of compressed air from the compressed air source 24 through conduit 35 to the connection 14b of spray gun 14. As further shown in Figs. 1 and 2, the first component of the plural component material may be delivered from pump 31 to first connection 41 of means 20 through a flexible conduit 36. The second component of the plural component material may be delivered from pump 32 to connection 41 of means 20 through a flexible conduit 37 and solvent may be delivered from pump 33 to the fourth connection 44 of means 20 through a flexible conduit 38.

Fig. 2 also schematically illustrates the means for attachment of the plural component supply means 20 to the body of the workman in its preferable form of means 45 for attachment of the means 20 to the belt of a workman. Such an attachment means can be a three finger clip to slip over a workman's belt, as shown in Fig. 2, or a spring-loaded fastener, or a pin, or other such fastening means.

Indicated schematically with dashed lines in Fig. 2 is the valve 50 preferably provided in means 20 and the actuator 51 to move the valve between the first and second positions as described above.

Means 20 and valve 50 are shown in greater detail in Figs. 3, 4A and 4B described below. Fig. 3 shows an exploded view of plural component supply means 20 adapted to be supported and carried by the body of a workman. As shown in Fig. 3, the plural component supply means 20 comprises a first connection 41 adapted to receive a flow of the first component of the plural component material from the first source 21. In the preferred system of the invention, a flow of the first component is provided from source 21 by pump 31 through conduits 26 and 36 to the first connection 41. The plural component supply means 20 further comprises a second connection 42 adapted to receive a flow of the second component of the plural component material from the second source 22. As shown in Fig. 2, the flow of second component is provided by pump 32 through conduits 27 and 37 to the second connection 42. The plural component supply means 20 includes a third connection 43 adapted to provide a combined output of said first and second components of the plural component material. Plural component supply means 20 also includes a means 45 for attaching the plural component supply means 20 to the clothing of a workman. As indicated in Fig. 2, attachment means 45 is fastened to the plural component supply means 20 by a bracket portion 46. The attachment means, as shown in Figs. 2 and 3, is adapted to attach the plural component supply means 20 to a belt of a workman and includes three fingers 48a, 48b and 48c. In attaching the plural component supply means 20 to a workman, the attachment means 48 is slid over the belt of a workman with its fingers 48a and 48c on one side of the belt and finger 48b on the other side of the belt so that the plural component supply means 20 is carried by the workman's belt.

As further shown in Fig. 3, the plural component supply means 20 is provided with a fourth connection 44 adapted to receive a flow of solvent. As shown in Fig. 2, the flow of solvent can be provided by pump 33 of apparatus 27 through conduits 28 and 38 to the fourth connection 44. The flow of solvent can also be provided from a pressure pot, as known in the art.

Fig. 3 also shows check valves 47 and 49 in the connections 41 and 42, respectively, for the first and second components. Check valves 47 and 49 include body elements 47a and 49a that form internal valve seats and are adapted to be fastened in the plural component supply means 20. Check valves 47 and 49 also include ball valves 47b and 49b that are retained in body elements 47a and 49a by roll pins 47c and 49c. In the event that one of the plural component materials would try to flow into the connection for the other plural component material, it would seat the ball valve against the valve seat formed by the body element of the check valve and flow through the check valve would be stopped. The embodiment of the plural component connection means shown in Fig. 3 is adapted to be connected with a source of resin at connection 41 and a source of catalyst at connection 42, and the catalyst connection 42 is provided with a restriction 42a for the flow of catalyst to reduce pulsation in the flow of catalyst as a result of pressure pulses due to pump operation. The restriction 42a may take many forms, but a preferable form is a conventional airless spray nozzle inserted into connection 42 as shown in Fig. 3; an airless spray nozzle having a 0.28 mm (0.011 inch) orifice and a spray angle of 40° provide a very effective restriction. The airless spray nozzle can be protected against clogging by a screen 42b having an appropriate mesh size.

As indicated above, means 20 preferably includes a valve 50 to control the flow of plural component material for coating operations and the flow of solvent for cleansing operations. The valve is movable by means of actuator 51 to a first position. In the first position, first connection 41 and second connection 42 are interconnected with the third connection 43, thereby permitting the first and second components of the plural component material to flow through means 20 and the valve 50 to be combined therein and flow outwardly through the third connection 43. In the first position, the flow of solvent through the fourth connection 44 (and the plural component supply means 20) is blocked the valve 50. When actuator 51 places the valve 50 in the second position, the valve 50 blocks flow of plural component material through the first connection 41 and second connection 42 and connects the fourth connection 44 with the third connection 43, thereby allowing a flow of solvent through connection 44, plural component supply means 20, valve 50 and third connection 43 to the flexible hose 23 leading to spray gun 14.

As indicated above, the invention includes valve 50 and its novel structure and means of operation. Figs. 4A and 4B illustrate the valve 50 of this invention. As shown in Figs. 4A and 4B, the plural component supply means 20 can be formed by a valve body 52 and a movable valve member 53 carried within a cavity formed by surface 52a of the valve body. The movable valve member is preferably a spherical valve member that is rotatable between the first and second positions thus providing the inexpensive, reliable ball valve structure. Although not shown in the drawings, the preferred ball valve structure of this invention is provided with seals for its operation in a manner well known to those skilled in the valve art. U.S. Patent Nos. 3,675,895; 3,735,956; 4,026,516; and 4,685,488 disclose structures for sealing such valves.

As shown in Figs. 4A and 4B, the valve body 52 is provided with a first passageway 61 which can lead from a first connection for fluid material, such as, the first connection 41 shown in Fig. 3. First passageway 61 leads to a first interior opening 61a at the cavity 52a of the valve body. The valve body is further provided with a second passageway 62 leading from a second connection which can be, for example, second connection 42 as shown in Fig. 3, to a second internal opening 62a at the cavity 52a of the valve body. The valve body can further be provided with a third passageway 63 leading from a third connection, such as, connection 43 of Fig. 3, to a third opening 63a at the cavity 52a of the valve body. The valve body 52 can be provided with a fourth passageway 64 leading from a fourth connection which can be, for example, connection 44 of Fig. 3, to a fourth opening 64a at the cavity 52a of the valve body. The movable valve member, or ball, 53 is provided with a first valve passageway 71, a second valve passageway 72 and a third valve passageway 73, all leading to an internal passageway junction 74. The valve body passageways 61, 62, 63 and 64 and the movable valve member passageways 71, 72 and 73 are located at the cavity-forming surface 52a of the valve body and the surface of the movable valve member 53 so that in the first position of the movable valve member, shown in Fig. 4A, first valve passageway 71 is aligned with the first passageway 61 of the valve body, the second valve passageway 72 is aligned with the second passageway 62 of the valve body and the third valve passageway 73 is aligned with the third passageway 63 of the valve body thereby permitting fluid materials, such as first and second components of the plural component material, to flow through the first and second passageways 61, 71, 62 and 72 of the valve body and valve member, respectively, to combine at the internal passageway junction 74 and to flow through the third passageways 73 and 63 to a third, or output, connection. In the second position of the valve member 53, shown in Fig. 4B, either one of the first and second valve passageways 71, 72 of the valve member 53 can be aligned with the fourth passageway 64 of the valve body and the other of the first and second valve passageways 71, 72 is blocked by the cavity wall 52a of the valve body 52. As shown in Fig. 4B, the second valve passageway 72 is aligned with the fourth passageway 64 of the valve body and the first valve passageway 71 of the movable valve member 53 is blocked by wall 52a of valve body 52. In the second position, the third valve passageway 73 is aligned with the third passageway 63 of the valve body, thereby permitting fluid flow, such as solvent, to flow through the fourth passageway 64 of the valve body, passageway 72 of the movable valve member 63 to the internal passageway junction 74, into passageway 71 and outwardly through the third valve passageway 73 and third passageway 63 of the valve body to the third, or output, connection. It is apparent by rotation of the valve body 53 through 90° clockwise and counterclockwise, passageways 71 or 72 of the movable valve member may be aligned successively with the fourth passageway 64 of the valve body with the remaining passageways being blocked.

As shown in Figs. 4A and 4B, the movable valve member 53 is preferably rotatable about the central axis of the third valve passageway 73 so the third valve passageway 73 remains in alignment with the third passageway 63 of valve body 52. As is also shown in Figs. 4A and 4B, the first and second valve passageways 71 and 72 of the movable valve member 53 preferably share the same central passageway axis and form a "T" with the third valve passageway 73 at the internal junction 74 of the movable valve member.

Where the valve 50 is used in a plural component spraying system, it is preferable that passageways 61 and 62 be used for the components of the plural component material. Passageways 61 and 62 can include check valves, such as check valves 47 and 49 shown in Fig. 3, to block flow of fluid materials from junction 74 outwardly through passageways 61 and 62. As shown in Fig. 3, such a check valve arrangement will prevent a curing agent of one plural component material from being forced outwardly from junction 74 into the connections to plural component supply means 20. Where size permits, check valves may be provided at the entrance of passageways 71 and 72 of the movable valve member. It will be apparent that by rotating actuator 51 through 90° from the first position, the internal passageways of valve 50 that contain combined components of the plural component material can be cleansed of the residue of any such components by a flow of solvent through the fourth passageway 64 and passageways 71, 72, 73 and 63 of the valve 50.

While it is preferable in plural component spraying systems that valve 50 be incorporated into the plural component supply means 20 supported and carried on the body of the workman, the valve 50 is particularly adaptable to be carried on the body 14 of the spray gun, preferably at the base of the handle. In such an adaptation, the valve body 52 is provided with a connector surrounding the third passageway 63 and the connector at third passageway 63 is attached to the base of the handle 14c of spray gun 14 at the position of connection 14a shown in Fig. 2. In such a position, the actuator 51a of the valve 50 can be easily operated by the workman to switch the operation of gun 14 from a spraying to a cleaning mode.

Where the plural component supply means 20 is carried by the body of the workman or where the valve 50 is carried at the base of the handle 14c of spray gun 14, it is preferable that the connections for the plural component materials and solvent provide closely spaced hose connections that extend in a convenient direction. For example, as shown in Figs. 1 and 3, the first and second connections 42 and the fourth connection 44 can be grouped closely together and extend in such a direction that the hoses 36, 37 and 38 for the plural component materials and solvent, respectively, extend in a convenient direction which may be as indicated in Fig. 1 rearwardly from the workman. Where the valve body 50 is attached at the base of a handle 14c of the spray gun, a rotatable connection can be interposed between the passageway 63 of the valve body and the internal passageway of the spray gun. It is, of course, not necessary that the valve 52 be attached at the base of the handle of the spray gun, it may, of course, be attached at the forward portion 14d of the spray gun if the fluid passage of the spray gun is restricted to the forward portion thereof.

It is apparent that the invention provides an improved plural component spraying method applicable to many plural component spraying operations and provides a substantially improved apparatus and method for spraying plural component paints. The plural component spraying method of the invention includes the steps of providing connections of plural component materials and supporting and carrying the connections on a workman's body, providing a flow of a first component of a plural component material at a first one of the connections and a second flow of plural component material at a second one of the connections, combining the flows of first and second components of plural component material at the location of the connections supported and carried by a workman's body and providing a combined flow of the first and second components from a third one of the connections through a single flexible conduit to a spray gun. In the method, the combined flow of the first and second components can be exposed to further mixing at any time after their combination, and preferably the combined flow of first and second components is mixed between the connections at the body of the workman and the spray gun within the interconnecting flexible conduit.

The method of the invention permits convenient cleansing of the system of mixed plural component materials by providing a flow of solvent for the components of the plural component material to a fourth one of the connections supported and carried by the workman's body and by providing a valve supported and carried by the workman's body and operable by the workman to interconnect either the plural component connections, or the solvent connection, and connection to the spray gun for either spraying operations or cleansing. In the method, the valve is operated by the workman to place it in the first position in which a flow of cleansing solvent is blocked and the first and second components of plural component materials are permitted to flow through the valve and the connections to be combined in the valve and directed in a combined flow through the output connection, the flexible interconnecting conduit and the sprayer for spraying operations, and to place it in a second position in which the flows of plural component materials are blocked and the flow of solvent is permitted through the solvent connection and the valve and is directed through the output connection, the flexible interconnecting conduit and the spray gun to cleanse the system.

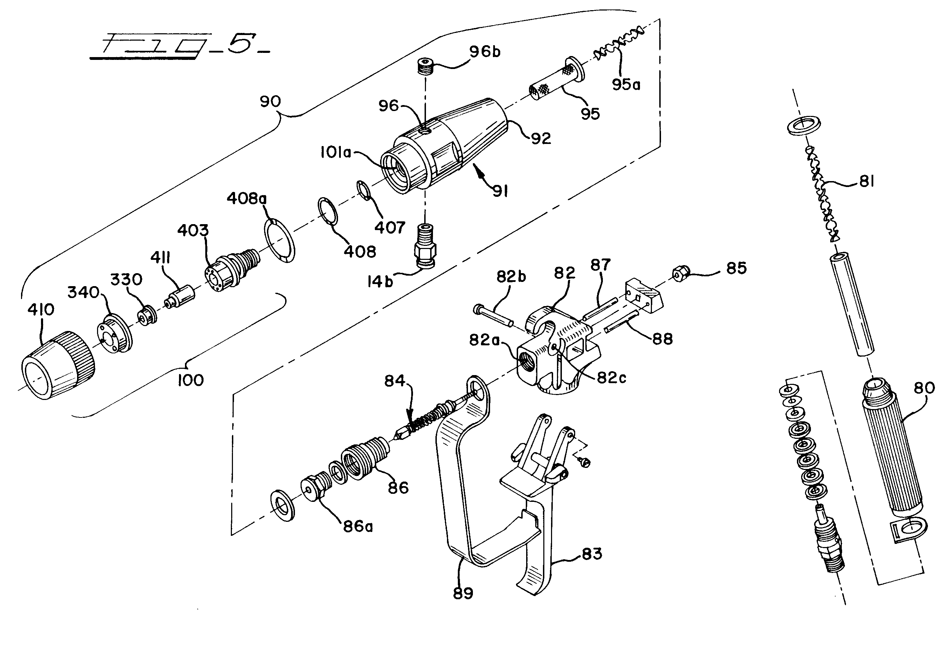

As shown in Fig. 5, a preferred spray gun for gel coat operations and industrial painting operations is a small, lightweight, maneuverable spray gun which is adapted for substantially effortless manipulation by means of its handle. Fig. 5 shows such a spray gun in an exploded view. The spray gun includes a handle member 80 which is hollow and can be provided with, if advisable, a static mixing means 81. The handle member 80 is threaded into a main gun body 82 that includes a further fluid passageway 82a and carries a trigger-like valve actuator 83 and is designed interiorally of the fluid passageway 82 to support a movable valve member 84. Valve member 84 is adapted to provide sealing engagement with the main valve body 86 and to be held in gun body 82 by a fastener 85. Valve member 84 is actuated by the trigger actuator 83 which pivots on an axle 82b carried in a bore 82c that is formed in the gun body 82 more valve actuating rods 87 and 88. Threaded onto the forward part of main valve body 86 is a forward gun body portion 90 which forms a part of the method and apparatus of this invention as set forth below. The portion of the spray gun represented by members 80 through 89 are adapted from the prior art.

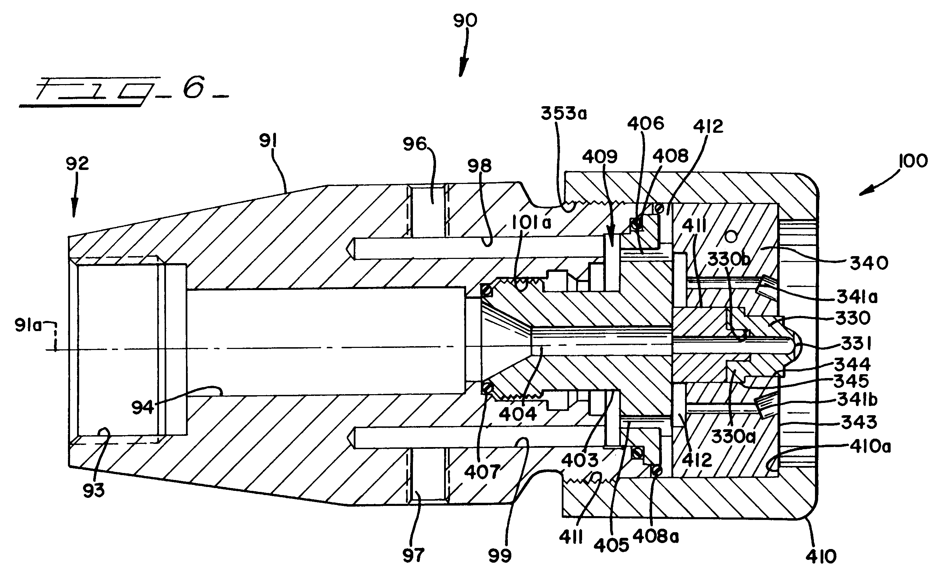

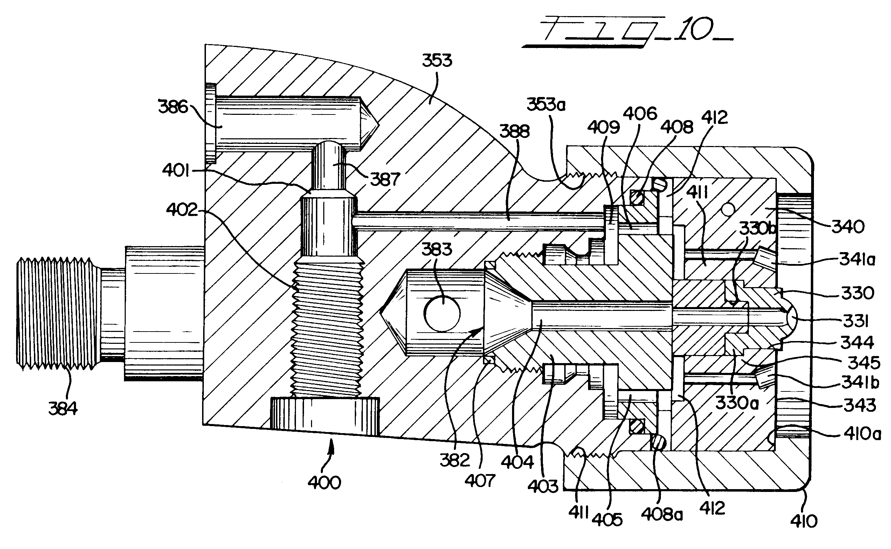

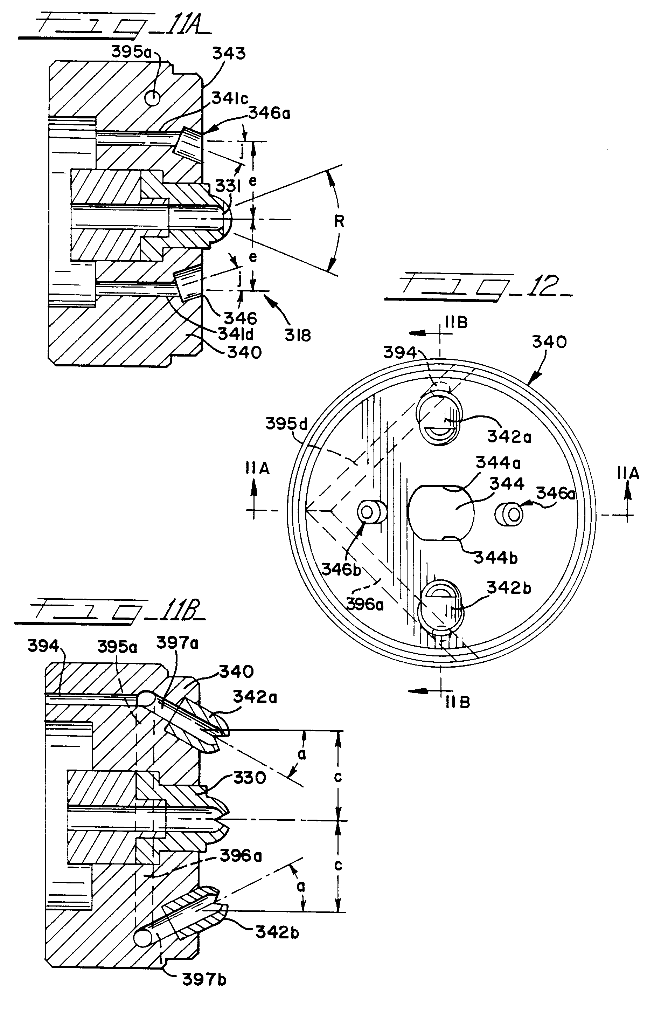

Fig. 6 shows the forward portion 90 of spray gun 14. As shown in Fig. 6, the forward portion 90 includes a body 91 adapted at its rear end 92 for threaded attachment to the threaded main valve body 86, which itself fastens valve member 84 and trigger guard 89 to the gun body portion 82 and provides a valved internal opening (not shown) for valve member 84. Rear end 92 of the body 91 includes a threaded bore 93 adapted to be threaded onto the threaded external portion of part 86. The rear portion 92 of body 91 also includes an enlarged central bore 94. The enlarged bore 94 is adapted to accept a fluid material strainer 95 and a static mixer 95a, as shown in Fig. 5, within the body 91. Bores 93 and 94 communicate with the liquid passageway of the spray gun body and direct mixed plural component material forwardly to the spray forming means 100 held by threads on the forward portion of body 91. Spray forming means 100 is shown in Fig. 6 in a position to form a spray pattern with its long dimension extending vertically. Body 91 further comprises a pair of bores 96 and 97 extending transversely of the body, each intersecting one of another pair of bores 98 and 99, respectively, that extend parallel to the bore 94 and the central body axis 91a. Either passageway 96 or 97 can be used for the connection 14b and the attachment of compressed air to the forward portion of spray gun 14. The unused passageway, either 96 or 97, would be blocked by a threaded plug 96b, as shown in Fig. 5. As shown in Fig. 6, spray forming means 100 comprises a threaded fitting 403 which is threaded into a threaded bore 101a formed in the forward portion of body 91. An O-ring seal 407 is compressed between threaded member 403 and the surface of the body 91 to provide a sealed engagement of bore 404 and threaded member 403 with the bores 94 and 93 of spray gun body 91. When threaded fitting 403 is threaded into body portion 91, fitting 403 compresses O-ring seals 407 and 408 against body portion 91 and forms an annular air chamber 409 between body portion 91 and fitting 403 and seals the interface between passageway 94, body portion 91 and passageway 404 of threaded fitting 403 and also seals the interface between passageways 98 and 99 of body portion 91, annular air chamber 409 and passageways 405 and 406 of threaded fitting 403. The nozzle assembly 100 is attached to body portion 91 of spray gun 14 with a threaded nut 410. Nozzle assembly 100 includes an airless liquid nozzle 330 and an air nozzle 340. Liquid nozzle 330 forms plural component material flowing through passageways 93, 94 and 404 into a fanlike film with expanding edges extending from the liquid nozzle 331 formed in nozzle 330. Air nozzle assembly 340 forms a controlled first flow and a controlled second flow of air through a plurality of air orifices in the nozzle assembly. Air nozzle assembly 340 includes in its preferred embodiment a plurality of air orifices 341a, 341b and a plurality of nozzles 342a and 342b (see Figs. 11A, 11B and 12). Nozzles 342a and 342b form the compressed air flowing therefrom into an air stream having greater width than thickness. Nozzle assembly 100, including liquid nozzle 330 and air nozzle 340, forms a plural component material having a spray pattern which has uniform distribution of spray throughout the pattern along its longitudinal axis and without escaping spray particles. The spray pattern is substantially smaller than spray patterns obtained with prior systems and may be conveniently used by a workman operating spray gun 14 to provide easily, a thin uniform coating on an article of manufacture. A more detailed explanation of the structure and operation of the nozzle assembly 100, that is, the manner in which threaded member 403, liquid nozzle 330 and air nozzle 340 combine in providing improved spraying operations is set forth below in conjunction with the following discussion of a preferred internal-mix plural component spraying system for spray-up operations. Nozzle assembly 100 is identical to nozzle assembly 318 which is described below.

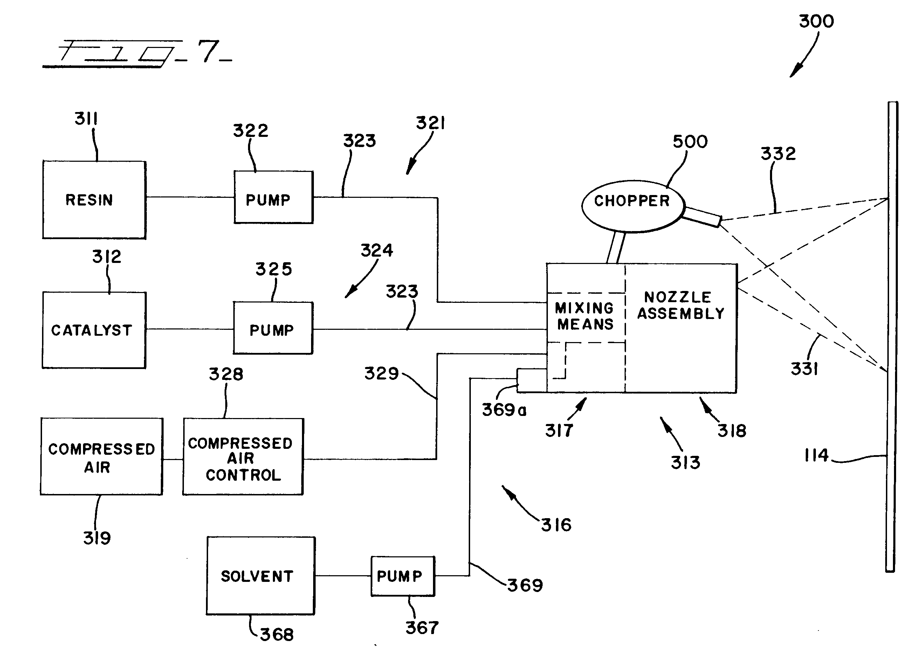

Figs. 7-12 illustrate a preferred embodiment of an internal mix, plural component spraying system of this invention for the manufacture of plastic articles.

Figs. 7-10 illustrate a preferred embodiment of a hand-held, spraying means 313. The hand-held spraying means 313 preferably comprises a spray gun body 317 with a nozzle assembly 318 at its front. Spray gun body 317 and nozzle assembly 318 are described in substantially more detail below.

The embodiment of Figs. 7-10 shows the nozzle assembly 318 adapted for use without a chopper, that is, its spray pattern is oriented vertically. Spraying means 313 may be fitted with a chopper 500 by attaching it to spray gun body 317 by means of a bolt fastener 311 at the top of spray gun body 317. When spray means 313 is used with a chopper, the nozzle assembly is oriented to provide a horizontal oriented spray pattern. When a chopper is used in conjunction with spraying means 313, a flexible air hose 501 connects opening 502 at the top of spray gun body 317 to the chopper. When a chopper is not used with spraying means 313, hole 502 is plugged with a threaded closure.

Fig. 7 schematically illustrates an internal mix, air-assisted, airless atomization, plural component spraying system of the invention. The system is generally designated by reference numeral 300 and includes a first source 311 of a first component, e.g., a resinous material; a second source 312 of a second component, e.g., a catalyst for the resinous material; spraying means 313 for mixing the catalyst and resin and for directing the mixture at a substrate 114; and delivery means 316 for delivering the resin, catalyst and compressed air to the spraying means during operation of the system.

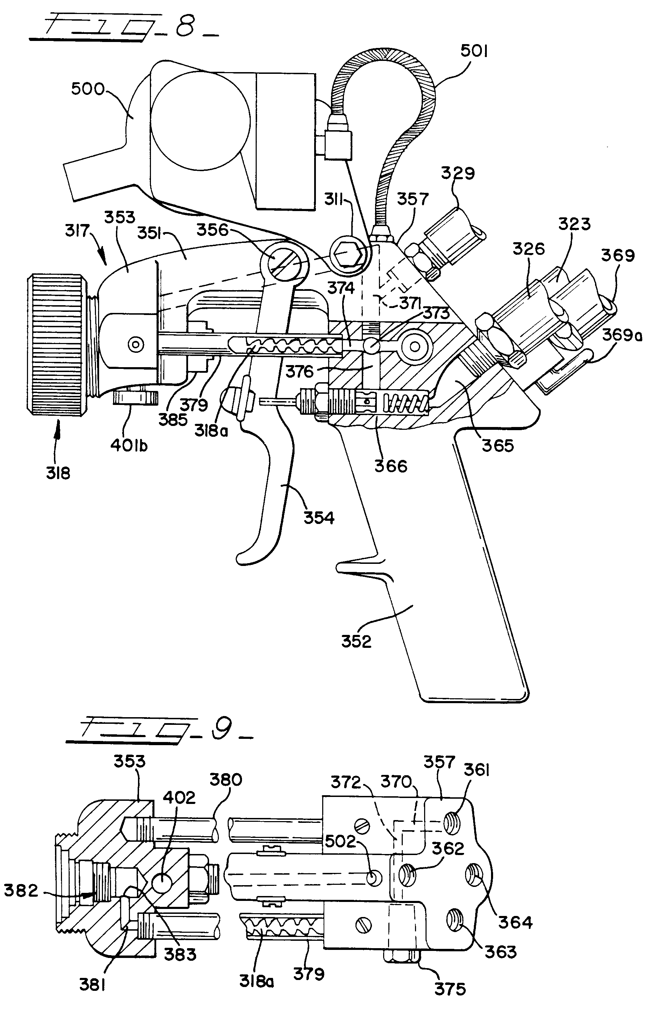

Spraying means 313 is shown in Figs. 8-12 and preferably comprises a hand-held gun which includes a spray gun body 317 with a nozzle assembly 318 at its front. Spray gun body 317 incorporates a mixer 318a to mix the resin and catalyst within spray gun body 317. Nozzle assembly 318 comprises an air-assisted, airless atomization nozzle assembly in which compressed air and liquid pressure are combined in the spraying of the mixed resin and catalyst. Thus, system 300 includes a compressed air source 319. Delivery means 316 includes means 321 for delivering the resin, including a resin pump 322 and resin conduit 323, between the source of resin 311 and the spray gun body 317; means 324 for delivering catalyst, including a catalyst pump 325 and a catalyst conduit 326, between the source of catalyst 312 and the spray gun body 317; and means 327 for delivering compressed air, including a compressed air control 328 and an air conduit 329, between compressed air source 319 and spray gun body 317.

As described below, a flow of resin from resin source 311 and a flow of catalyst from catalyst source 312 are delivered to spray gun body 317 where they are mixed by mixer 318a and directed as a mixture of catalyst and resin to nozzle assembly 318 which creates a spray of resin-catalyst particles for direction to a substrate 314. Nozzle assembly 318 includes an airless spray nozzle to which the mixed resin and catalyst are directed and which forms the mixed resin and catalyst into a fan-like film. Nozzle assembly 318 also includes a plurality of compressed air nozzles to coact with the airless spray nozzle to assist in atomization of the resin-catalyst mixture, particularly the tails of the fan-like resin-catalyst film formed thereby, and to capture the particles of resin and catalyst within the resulting spray pattern. Thus, mixed resin and catalyst can be applied to substrate 114 where it solidifies to form an article of manufacture. Substrate 114 can be a mold for an article, such as a boat hull, boat part, shower stall or the like. Any one of a number of resins and catalysts can be used in systems of this invention.

System 300 may, of course, include a chopper 500 carried by spraying means 313 to dispense strands of fiberglass or the like into spray pattern 331, as shown at 332, to reinforce the article of manufacture formed on substrate 314.

Figs. 8-10 illustrate spraying means 313 including spray gun 317 and 318 in greater detail. As shown in Fig. 8, spray gun 317 includes a body portion 351, a handle portion 352 and a head portion 353. A trigger 354 is movably attached to body portion 351 by an axle or pin 356.

The rear face of body portion 351 of spray gun body 317 defines a mounting platform 357 having a plurality of openings 61, 62 and 63 formed therein (see Fig. 9). Openings 61-63 comprise inputs to a plurality of passageways within spray gun body 317 through which resin, catalyst and compressed air flow in operation of the spray gun. Resin conduit 323 is connected to opening 361; catalyst conduit 326 is connected to opening 363; and air conduit 329 is connected to opening 362. A fourth opening 364 permits a cleansing solvent to be forced through spray gun 317 to cleanse it of mixed resin and catalyst and prevent mixed resin and catalyst from curing within spray gun 317 and preventing its operation. A solvent pump 367 delivers solvent from a solvent source 368 through a solvent conduit 369 connected to opening 364. As shown in Fig. 8, platform 357 is angled at about 30°-60° to conveniently connect spray gun 317 to conduits 323, 326, 329 and 369.

As shown in Fig. 8, catalyst is delivered through catalyst conduit 326 and opening 363 into passageway 365, and a control valve assembly 366. Resin is delivered through resin conduit 323 and opening 361 into passageway 370 (shown in phantom in Fig. 9) to a valve assembly (not shown) which is like valve assembly 366 but is located on the opposite side of spray gun body 351 generally in line with opening 361. Compressed air is delivered through air conduit 329 and opening 362 into passageway 371 (shown in phantom in Fig. 8) to a fluid valve assembly (not shown) which is like valve assembly 366 but is located between the other two valve assemblies so that all three valve assemblies may be actuated by activation of trigger 354.

Upon activation of trigger 354, resin is permitted to flow from passageway 370 into passageway 372 (both of which are shown in phantom in Fig. 9) which opens at opening 373 into passageway 374, as shown in Fig. 8. Opening 373 is closed by a check valve 375 threaded into the spray gun body 351 until actuation of trigger 354 permits the hydraulic resin pressure from resin pump 322 to force resin into passageway 372 (Fig. 9) and through check valve 375 to passageway 374. Actuation of trigger 354 also permits catalyst to flow from passageway 365 into passageway 376 and passageway 374 (Fig. 8). Resin and catalyst flow through passageway 374 into tubular member 379 which contains mixer 318a where the resin and catalyst are mixed. Mixer 317 may be any commercially available static mixer of the type manufactured, for example, by TAH Industries, Inc., of Imlaystown, N.J. 03526 and sold as Stata-tube Part No. 5-3P. As shown in Fig. 9, the mixture of resin and catalyst flows from tubular member 379 into passageway 381 of head portion 353 of spray gun body 351. Passageway 381 opens into a bore 382 formed in head portion 353 at opening 383 (see Figs. 9 and 10). As will be described below with respect to Figs. 10-12, the resin-catalyst mixture will be forced from cavity 382 through the nozzle assembly 318.

Upon actuation of trigger 354, compressed air is permitted to flow from passageway 371 through passageways (not shown) formed in spray gun body 357 to the head portion 353. Fig. 10 illustrates in cross-section head portion 353 of spray gun body 351 with nozzle assembly 318 attached. As those skilled in the art will recognize, head portion 353 will be held to spray gun body 351 by means of the threaded extension 384 and a nut 385 (Fig. 8). When so attached, passageway 386 of head portion 353 will be sealed in communication with the compressed air passageways of spray gun body 351.

Compressed air will be delivered, upon actuation of trigger 354, into passageways 386 and 387. Head portion 353 is also provided with means forming an air control for nozzle assembly 318; such air control means is provided in bore 400 which includes a valve seat 401 and a threaded portion 402. As shown in Fig. 8, a valve member 401a threaded into bore 400 can be used to adjust the flow of compressed air from passageway 387 through valve seat 401 into passageway 388.

Fig 10 also illustrates opening 383 through which the resin-catalyst mixture flows in cavity 382. As shown in Fig. 10, cavity 382 is provided with a threaded fitting 403 which includes a central passageway 404 in communication with cavity 382 and a plurality of passageways 405 and 406. When threaded fitting 403 is threaded into head portion 353, fitting 403 compresses O-ring seals 407 and 408 against head portion 353 and forms an annular air chamber 409 between head portion 353 and fitting 403 and seals the interface between cavity 382 and passageway 404 and the interface between passageway 388, annular air chamber 409 and passageways 405 and 406.

Nozzle assembly 318 is attached to the head portion 353 of spray gun 317 which a threaded nut 410.

In operation, spraying means 313 provides an expanding flow of mixed resin and catalyst which may be directed by the system operator onto a substrate 114, which may be a mold or preform used to manufacture articles of varied shape. Spraying means 313, assembled as shown in Fig. 10, is used without a chopper to form a smooth, catalyzed resin film on substrate 114. Such smooth, non-reinforced resin films are frequently referred to as being a "gel coat" and provide a smooth article surface. When spraying means 313 is used to spray gel coat, the nozzle assembly 318 provides a vertically oriented spray pattern. If further strength is required in the manufactured article, spraying means 313 may be operated with a chopper to introduce into the catalyst-resin spray reinforcing fibers of selected length into a layer of catalyzed resin deposited over the gel coat on the substrate. These fibers are preferably chopped fiberglass as described above. Upon completion of each use and before allowing spraying means 313 to be idle for any significant time, the interior passageways of spraying means 313 exposed to mixed resin and catalyst are flushed with solvent from solvent source 368. A small, manually operated valve 369a can be mounted on the rear of spraying gun body 317 to permit convenient control of the solvent flush by the gun operator.

As set forth above, Fig. 10 is a cross-sectional view of head portion 353 of spraying means 313 with nozzle assembly 318 attached. The cross-sectional view of Fig. 10 is viewed at a vertical plane through the center of nozzle assembly 318. Nozzle assembly 318 includes an airless liquid resin nozzle 330 and an air nozzle 340. Liquid nozzle 330 forms the resin flow into a fan-like film with expanding edges extending from a liquid orifice 331 formed in nozzle 330. Air nozzle 340 forms a controlled flow of air through a plurality of air orifices 341a, 341b and a controlled flow of air from a plurality of nozzles 342a and 342b (see Figs. 11A and 11B). Nozzles 342a and 342b form the compressed air flowing therefrom into an air stream having greater width than thickness. Nozzle assembly 318, including liquid nozzle 330 and air nozzle 340, forms a resin-catalyst mixture having a spray pattern which has a uniform distribution of spray throughout the pattern along its longitudinal axis and without escaping catalyst particles. The spray pattern is substantially smaller than the spray patterns obtained with prior systems and may be conveniently used by an operator of spraying means 313 to provide a uniform, catalyzed, resin film on a substrate, mold or preform.

Fig. 10 shows how nozzle assembly 318 is assembled onto head portion 353 of spray gun body 317. As shown in Fig. 10, spray nozzle 330 is held onto head portion 353 of the spray gun body by air nozzle 340 and a threaded retainer nut 410. Retainer nut 410 includes a threaded portion 411 at its rear which threads onto a threaded portion 353a at the forward end of head portion 353. At its forward portion, retainer nut 410 forms an inwardly projecting flange 410a which engages the front face 343 of air nozzle 340, urging it rearwardly and tightly against the front face of threaded member 403 of the spray gun body. Air nozzle 340 is formed with a central opening 344 which is shaped to include two flat surfaces 344a and 344b (see Fig. 12). Opening 344 fits around liquid nozzle 330. A rearwardly facing flange 345 is formed around central opening 344; and as the retaining nut 410 is threaded onto the head portion 353 of the spray gun and its rearwardly facing flange 410a engages the front face 343 of air nozzle 340 and urges air nozzle 340 rearwardly, flange 345 of air nozzle 340 presses liquid nozzle 330 rearwardly into engagement with sealing means 411 and threaded member 403. As shown in Fig. 10, sealing means 411 is preferably formed with a forward portion of reduced diameter to fit within an enlarged cavity 330b at the rear of liquid nozzle 330. Sealing means 411 can thus be sealingly engaged between liquid nozzle 330 and threaded member 403. Thus, as retaining nut 410 is threaded onto head portion 353 of the gun body, it simultaneously fastens the air nozzle 340 and liquid nozzle 330 to gun body portion 353 and seals, by means of seal means 411, between liquid nozzle 330 and air nozzle 340 and between liquid nozzle 330 and threaded member 403. Body portion 403 comprises a generally cylindrical-shaped component of aluminum or stainless steel having a central passageway 404 extending from its front face longitudinally into, but not through, its body.

When trigger 354 is pulled rearwardly, opening the valve assemblies, the resin-catalyst mixture flows under the influence of pressure imparted by pumps 323 and 325 through opening 383, cavity 382, passageway 404, sealing means 411, liquid nozzle 330 and opening 331 therein. Liquid nozzle 330, an airless atomizing nozzle, includes an interior passageway formed to force the resin to flow into a fan-like film with expanding edges extending forwardly from liquid orifice 331a.

Threaded member 403, when in place in cavity 382 formed in head portion 353 of the spray gun, also forms an air passage to deliver a flow of compressed air to the plurality of air orifices in the front of the air nozzle 340. As shown in Fig. 10, when air nozzle 340 is attached to the spray gun, a second annular air chamber 412 is formed between the forward face of threaded member 403 and air nozzle 340. Threaded member 403 includes a plurality of passageways (405, 406, Fig. 10), preferably four, extending forwardly from its rear face at the first annular air chamber 409 to its forward end where the plurality of passageways (405, 406) opens into the second annular air chamber 412 formed between threaded member 403 and air nozzle 340. A plurality of air passageways extends from the rear air nozzle surface that communicates with the second annular air chamber 412 to orifices 341a and 341b and nozzles 342a and 342b at the front face 343 of air nozzle 340 (Fib. 11B). Compressed air, which is controlled by a valve assembly in spray gun body 317, is directed through passageways which are not shown in spray gun body 317 to the interface between head portion 353 and the front portion of spray gun body 351. As shown in Fig. 10, when trigger 354 is operated, the compressed air flows from source 319 and compressed air control 328 (Fig. 7) through conduit 329, opening 362, passageways 371 and others in gun body 317 (not shown), passageways 386, 387 and 388, the first annular air chamber 409, the plurality of passageways 405, 406, the second air chamber 412 and the passageways 341c and 341d and the plurality of nozzles 342a and 342b formed in air nozzle 340.

Thus, as shown in Figs. 10, 11A and 11B, compressed air flows through annular air chamber 412 into passageways 394, 395a and 396a (see Figs. 11B and 12) drilled into the main body of air nozzle 340. Passageways 395a and 396a intersect within the body of spray nozzle 340 with passageway 394 and are closed at the peripheral surfaces of the body. As shown in Fig. 11B, compressed air is directed via passageways 397a and 398a which intersect passageways 395a and 396a, respectively, to the plurality of air nozzles 342a and 342b. Air nozzles 342a and 342b direct an expanding air stream at the expanding, fan-like flow of resin and catalyst from the liquid nozzle 330 which is positioned in central opening 344, as described below. Central opening 344 of nozzle assembly 340 includes two flattened portions 344a and 344b (see Fig. 12) to ensure that nozzle assembly 340 is properly aligned with airless nozzle 330. Compressed air thus flows through passageways 394, 395b and 396b to passageways 397b and 398b, respectively, and to air nozzles 342a and 342b and through passageways 341c and 341d. Air nozzles 342a and 342b may be pressed into the body of nozzle assembly 340 or may be fastened therein by any convenient fastening method.

Nozzle assembly 340 surrounds airless nozzle 330, which preferably forms a fan-like film with an included angle R of 40°-50°; and the airless nozzle is located within opening 344 at the longitudinal center line of nozzle assembly 340. Air nozzles 342a and 342b formed by the nozzle assembly are located on a plane that is perpendicular to and bisects the expanding, fan-like liquid film formed by the airless nozzle. Air nozzles 342a and 342b are oriented to direct their expanding flow of compressed air at an acute, included angle a with respect to the expanding, fan-like liquid film to impinge upon the expanding fan-like film at a distance of from about 12.7 mm to about 20.3 mm (about five-tenths to about eight-tenths of an inch) forwardly of the orifice 331 of the airless nozzle 330. Such orientation prevents a troublesome accumulation of particles on the airless nozzle. In the embodiments illustrated in Figs. 11 and 12, air nozzles 342a and 342b can be equally spaced from the center line of the liquid orifice 331 of the airless nozzle by a distance c of about 9.5 mm to about 12.7 mm (about three-eighths of an inch to about one-half of an inch) and directed to form equal acute included angles a of about 25° to about 35° with respect to a plane containing the expanding fan-like liquid film.

The flow of compressed air in the illustrated embodiments of Figs. 11 and 12 is also formed by two passageways 341c and 341d parallel to both the longitudinal axis of a nozzle assembly and to each other. Two passageways 341c and 341d are equally spaced from the central axis of the airless resin nozzle a distance e of about 7.6 mm to about 10.2 mm (about three-tenths to about four-tenths of an inch) and lie in the plane that perpendicularly bisects the plane through the center of the catalyst spray nozzles. Where in one preferred embodiment using a resin nozzle with a nominal included angle R of 40°-50°, the distance c was about 11.6 mm (0.458 inch); the angle a was about 30°; and the distance e was about 9.5 mm (0.375 inch).

In addition, as shown in Fig. 11A, a pair of cavities 346a and 346b may be formed in the front face 343 of nozzle assembly 340 around air orifices 341a and 341b, respectively. Cavities 346a and 346b are formed in the front face 343 in such a manner that they extend inwardly at an acute angle with respect to air passageways 341c and 341d, respectively, but in such a manner that there are no surfaces forwardly of the air orifices 341a and 341b that lie within the imaginary extension of the air passageways 341c and 341d. Cavities 346a and 346b tend to form low-pressure areas adjacent the air orifices 341a and 341b which "soften" the edges of the compressed air jets projected from orifices 341a and 341b as the compressed air jets extend forwardly from the front face 343 of the air-catalyst nozzle. The acute angle j formed by the central axis of cavities 346a and 346b and the longitudinal axis of air passageways 341c and 341d may vary; with the specific embodiment described above, effective operation can be obtained with cavities 346a and 346b lying at an angle j equal to about 20° if the cavities have a diameter of about 3.5 mm (0.138 inch) and a depth of about 3.0 mm (0.118 inch); and the diameter of air passageways 341c and 341d is about 1.6 mm (0.062 inch).

In the absence of the flow of compressed air which characterizes this invention, the spray pattern of the liquid from an airless nozzle 330 includes a central portion having a high ratio of length to width and tapering ends, and two end portions at each edge of the pattern characterized by almost circular cross-sections and a heavy deposition of resin material. The air of this embodiment directed at the fan-like resin film from air nozzles 342a and 342b, in the absence of the compressed air flows from orifices 341a and 341b, substantially widens the spray pattern, increasing the ratio of length to width of the central portion without diminishing the concentration of liquid deposition at the end portions of the pattern and, further, results in an air billowing which carries fine resin-catalyst particles away from the spray pattern into the surrounding environment. With the flow of compressed air from orifices 341a and 341b directed at the expanding edges of the fan-shaped liquid film downstream of the impingement of the air from nozzles 342a and 342b, the uncontrolled billowing of air and escaping particles is eliminated and a surprising improvement in the size and uniformity of the spray pattern results.

Figs. 11A and 11B present an illustration of the arrangement of compressed air nozzles of air nozzle 340. The liquid nozzle forms the resin into a fan-like film having expanded edges forming an angle R, shown in Fig. 11A; in the preferred embodiments, R equals about 40° to 50°. Air passageways 341c and 341d lie preferably along axes parallel to each other and perpendicular to front face 343 of air nozzle 340. The central axes of air passageways 341c and 341d are displaced from the center line of nozzle assembly 340 and the liquid orifice 33 at such a distance that the center axes of the passageways 341c and 341d intersect the expanding edges of the liquid film that form the included angle R downstream of the intersection of the air spray from air spray nozzles 342a and 342b. Thus, for preferable operation, the distance e (the separation between the center line of air passageways 341c and 341d from the center line of liquid orifice 331) divided by the tangent of one-half of the angle R (the included angle formed by the expanding fan-like liquid film) is greater than the distance c (the separation between the center line of the air spray nozzle orifices and the center line of liquid orifice 331) divided by the tangent of a (the acute angel between a line parallel to the central axis of airless nozzle 330 and the center axes of air nozzles 342a and 342b. In mathematical terms:

$$\frac{e}{\tan\frac{R}{2}} \qquad \frac{c}{\tan a}$$

In systems of the invention, the flow of compressed air is thus directed at the fan-like liquid film closely adjacent (i.e., directly at or a fraction of an inch in front of) the airless nozzle and at the expanding edges of the fan-like film downstream of the impingement of the air on the liquid film.

The air nozzle shown in Figs. 11A, 11B and 12 can thus provide combined flows of compressed air to assist the atomization of a plural component material mixture directed from an airless atomizing nozzle and to capture the resulting spray particles in a small spray pattern for deposition on a substrate. The spraying system of this invention is thus advantageously applied not only to resin-catalyst systems for the formation of fiber reinforced plastic products such as boats, shower stalls and the like, but to plural component painting systems for industrial applications. The invention also provides high volume, low pressure (HVLP) rated guns with pressures as low as $69 \times 10^3$ N/m$^2$ (10 pounds per square inch) at the air orifices.

Such systems provide substantially improved spray patterns. Systems of this invention are less expensive to manufacture, operate and maintain and are easier and safer to use through their improved spray patterns, and permit reductions of hydraulic pressure and compressed air pressure and more effective use of compressed air, and are more easily cleaned and manipulated than prior systems. Such systems can provide improved operation with hydraulic pressures substantially less than $3.4 \times 10^6$ N/m$^2$ (500 psi) and with air pressures of about $207 \times 10^3$ N/m$^2$ (30 psi) and less.

While what has been described constitutes a presently most preferred embodiment, the invention can take many other forms. Accordingly, it should be understood that the invention is to be limited only insofar as is required by the scope of the following claims.

**Claims**

1. A spraying system for forming a coating, including:
   a source of coating material (21, 22, 311, 312);
   spraying means (14, 300) for directing the coating material at an article (11, 114) to be coated;
   liquid delivery means (27, 322, 325) for providing a flow of said coating material from said source (21, 22, 311, 312) to said spraying means (14, 300); and
   air delivery means (24, 27, 29, 319, 328, 329) for providing a flow of compressed air to said spraying means (14, 300),
   said spraying means (14, 300) including an airless liquid nozzle (330) for forming the coating material into a fan-like liquid film with edges expanding from a liquid orifice, and an air nozzle assembly for directing compressed air to impinge on the fan-like film of coating material and assist in the formation of a particle spray characterized in that said air nozzle (340) directs a first flow of compressed air which impinges on the fan-like film (15, 331) of coating material closely adjacent the liquid nozzle (330) and directs second flows of compressed air which impinge on the edges of the film downstream of the impingement of the first flow of compressed air, said first and second flows of compressed air interacting with the fan-like film of coating material to assist atomization and capture particles of the particle spray.

2. The spraying system of claim 1 characterized in that said first flow of compressed air comprises two flows of compressed air directed from opposite sides of the fan-like film, and said second flow of compressed air comprises two flows of compressed air directed at the expanding edges of the fan-like film downstream of the impingement of the first two air flows to assist in the formation of and substantially confine the particle spray.

3. The spraying system of claim 2 characterized in that said two flows of compressed air comprising said first flow intersect said fan-like film within a fraction of 25.4 mm (one inch) of said airless liquid nozzle and said two flows of compressed air comprising said second flow are substantially parallel to each other.

4. The spraying system of claim 2 characterized in that said air nozzle assembly comprises:
   a nozzle body (340) having a central opening (344) at its longitudinal center line in which the airless liquid nozzle (330) is positioned;
   a pair of air nozzles (342a, 342b) equally spaced on opposing sides of the longitudinal center line of the nozzle body (340) for directing expanding first flows of compressed air at the planar surfaces of the fan-like resin film; and
   a pair of air orifices (346a, 346b) equally spaced on opposing sides of the longitudinal center line of the nozzle body and located on a line that perpendicularly bisects the line between the pair of air nozzles (342a, 342b), for directing said second flows of compressed air at the expanding edges of the fan-like resin film,
   said air nozzles being oriented to direct the first flows of compressed air to intersect the longitudinal center line of the nozzle body a fraction of an inch in front of the nozzle body, and
   said air orifices being positioned to direct the second flows of compressed air forwardly of the nozzle body and generally parallel to its longitudinal center line.

5. The spraying system of claim 1 wherein said source of coating material comprises:
   a first source (311) of a first component; and
   a second source (312) of a second component, said spray system being characterized by mixing means (81, 95a, 318a) for mixing said first and second components to provide a mixture of said first and second components to said spraying means (14, 300);
   said airless liquid nozzle (330) of said spraying means (14, 300) forming the mixture of first component and second component into a said fan-like film with edges expanding from a liquid orifice.

6. The spraying system of claim 5 characterized in that said first component comprises a resinous material and said second component comprises a catalyst for said resinous material.

7. The spraying system of claim 5 characterized in that said spraying means includes mixing means (81, 95a, 318a) upstream of said airless liquid nozzle (330).

8. The spraying system of claim 5 characterized in that said first flow from said nozzle assembly comprises two flows of compressed air directed from opposite sides of fan-like film, and said second flow of compressed air comprises two flows of compressed air directed at the expanding edges of the fan-like film downstream of the impingement of the first two air flows to assist in the formation of and substantially confine the particle spray.

9. The spraying system of claim 5 characterized in that said air nozzle assembly comprises:
   a nozzle body (340) having a central opening (344) at its longitudinal center line in which the airless liquid nozzle (330) is positioned;
   a pair of air nozzles (342a, 342b) equally spaced on opposing sides of the longitudinal center line of the nozzle body for directing expanding first flows of compressed air at the planar surfaces of the fan-like resin film; and
   a pair of air orifices (362a, 362b) being equally spaced on opposing sides of the longitudinal center line of the nozzle body and located on a line that perpendicularly bisects the line between the pair of air nozzles, for directing said second flows of compressed air at the expanding edges of the fan-like resin film,
   said air nozzles being oriented to direct the first flows of compressed air to intersect the longitudinal center line of the nozzle body a fraction of 25.4 mm (one inch) in front of the nozzle body, and
   said air orifices being positioned to direct the second flows of compressed air forwardly of the nozzle body and generally parallel to its longitudinal center line.

10. The spraying system of claim 5 further including a source of solvent (25, 367, 368) for said mixture of said first and second components and further characterized by:
   means (20) for supporting said hoses and controlling said first and second components and said solvent, said means (20) being adapted to be supported and carried on the body of a workman and including a first connection (41) adapted to carry said first hose and receive a flow of said first component, a second connection (42) adapted to carry said second hose and receive a flow of said second component and a third connection (44) adapted to carry said third hose and receive a flow of said solvent, a valve means (50) for said first and second components and solvent and an output connection (43) from said valve means (50) adapted to provide a combined flow of said first and second components or said solvent to said spraying means (14, 300).

11. The spraying system of claim 10 characterized in that the output connection and the spray gun are interconnected by a single flexible hose.

12. The spraying system of claim 11 characterized in that said single flexible hose incorporates mixing means for said combined flow of first and second components.

13. The spraying system of claim 11 characterized in that said handle of the spray gun has rotatable connecting means at its base, said hose is connected to said rotating connecting means, and said spray gun handle carries a mixing means for said plural component material components.

14. The spraying system of claim 10 characterized in that said valve means (50) comprises a valve connected with said first and second connections (41, 42) for said first and second components of the coating material, said connection (44) for said solvent and said output connection (43); said valve (50) having a first position interconnecting said first and second connections (41, 42) and said output connection (43), blocking said connection (44) for said solvent and permitting a flow of combined first and second components to said output connection (43), and a second position blocking said first and second connections (41, 42), connecting said solvent connection (43) to said output connection (44) and permitting a flow of solvent to said output connection.

15. The plural component spraying system of claim 14 characterized in that said means (20) is adapted for attachment to a workman's belt, said connections (41, 42, 43) are adapted to accept said hoses at a convenient location and from a convenient direction, and said valve means (50) includes a handle (51) extending therefrom for easy operation by a workman's hand.

16. A method of coating an article including the steps of:
delivering a flow of a coating material to a spraying means;
delivering a flow of compressed air to said spraying means;
forming the coating material into a fan-like film with expanding edges extending from the spraying means;
directing a flow of compressed air at the fan-like film to assist in the formation of spray particles; and
directing the spray particles at the article to be coated, said method being characterized by:
directing a first flow of compressed air which intersects the fan-like film of said coating material within a fraction of 25.4 mm (one inch) of the spraying means; and
directing second flows of compressed air which impinge on the edges of the film downstream of intersection of the first flow of compressed air and the fan-like film, said particle spray of coating material being substantially confined in a spray pattern of reduced size.

17. The method of claim 16 characterized in that said first flow of compressed air comprises two flows having greater width than depth intersecting the fan-like film with substantially the same locus from opposite sides.

18. The method of claim 16 characterized in that said second flow of compressed air comprises two parallel flows of compressed air directed to intersect the expanding edges of the fan-like film downstream of the intersection of said first flow of compressed air, said second flow of compressed air being substantially parallel to the plane of the fan-like film.

19. The method of claim 16 characterized by:
dividing the first flow of compressed air into two air flows having greater width than depth and directing said two air flows at the fan-like film of said coating material from opposite sides of the film within a fraction of 25.4 mm (one inch) of the spraying means; and
dividing the second flow of compressed air into two substantially parallel air jets directed at the expanding edges of the fan-like film downstream of intersection of the expanding air flows, said mixture being formed into a spray pattern with particles of coating material substantially contained in said spray pattern.

20. The method of claim 16 wherein said coating material comprises a plurality of components, characterized by the steps of:
delivering a flow of a first coating material component to a spraying means;
delivering a flow of a second coating material component to said spraying means; and
mixing said first component and said second component and forming the mixture of said first and second components into said fan-like film with expanding edges extending from the spraying means.

**21.** The method of claim 20 <u>characterized by</u>:

dividing the first flow of compressed air into two air flows having grater width than depth and directing said two air flows at the fan-like film of said mixture from opposite sides of the film within a fraction of 25.4 mm (one inch) of the spraying means; and

dividing the second flow of compressed air into two substantially parallel air jets directed at the expanding edges of the fan-like film downstream of intersection of the expanding air flows, said mixture being formed into a spray pattern with particles of mixed first and second components substantially contained in said spray pattern.

**22.** The method of claim 21 <u>characterized in that</u> said first component and said second component are mixed within the spraying means.

**23.** A nozzle for use with an airless spray nozzle in a spraying system, comprising:

a body (340) forming an opening (344) in its face (343) permitting the body (340) to be positioned adjacent an airless spray nozzle (330) that is adapted to project liquid material in a plane forwardly of the body (340) and forming a plurality of openings adapted to direct flows of compressed air at the liquid material, <u>characterized in that</u> said body (340) having a plurality of nozzle means (397a, 397b) to direct flows of compressed air forwardly of the body in a direction to intersect the plane of liquid material projected from the airless spray nozzle a fraction of 25.4 mm (one inch) forwardly of the face (343) of the body (340), and a plurality of means (341c, 341d) to direct flows of compressed air forwardly of the body, generally parallel to each other and generally in the plane of the plural component material projected from the airless spray nozzle (330).

**24.** The nozzle of claim 23 wherein said plurality of nozzle means to direct flows of compressed air comprises a pair of air nozzles (342a, 342b) centered upon and equally spaced on opposite sides of the body opening and oriented at an acute angle in the face of the body, said air nozzles forming the flows of compressed air therefrom into an expanding stream having greater width than depth.

**25.** The nozzle of claim 24 wherein said plurality of means to direct flows of compressed air forwardly of the body comprises a pair of passageways (341c, 341d) centered upon and equally spaced on opposite sides of the body opening (344) and further being generally equally spaced form each of the pair of air nozzles (342a, 342b).

**Patentansprüche**

1. Spritzsystem zum Herstellen einer Beschichtung, das umfaßt:

eine Quelle für Beschichtungsmaterial (21,22,311,312);

eine Spritzeinrichtung (14,300), die das Beschichtungsmaterial auf einen zu beschichtenden Gegenstand (11,114) leitet;

eine Flüssigkeitsabgabeeinrichtung (27,322,325), die einen Strom des Beschichtungsmaterials von der Quelle (21,22,311,312) zu der Spritzeinrichtung (14,300) erzeugt; und

eine Luftzuführeinrichtung (24,27,29,319,328,329), die einen Strom von Druckluft zu der Spritzeinrichtung (14,300) erzeugt,

wobei die Spritzeinrichtung (14,300) eine luftlose Flüssigkeitsdüse (330) enthält, die das Beschichtungsmaterial zu einem fächerartigen Flüssigkeitsfilm mit Rändern, die sich von einer Flüssigkeitsöffnung aus ausdehnen, formt, sowie eine Luftdüsenanordnung, die Druckluft so leitet, daß sie auf den fächerartigen Film aus Beschichtungsmaterial auftrifft und zur Bildung eines Teilchensprühnebels beiträgt, **dadurch gekennzeichnet**, daß die Luftdüse (340) einen ersten Strom von Druckluft leitet, der auf den fächerartigen Film (15,331) aus Beschichtungsmaterial in großer Nähe zu der Flüssigkeitsdüse (330) auftrifft, und zweite Ströme von Druckluft leitet, die stromab vom Auftreffpunkt des ersten Stroms von Druckluft auf die Ränder des Films auftreffen, wobei der erste und die zweiten Ströme von Druckluft mit dem fächerartigen Film aus Beschichtungsmaterial so zusammenwirken, daß sie zur Zerstäubung von Teilchen des Teilchensprühnebels beitragen und diese einfangen.

2. Spritzsystem nach Anspruch 1, **dadurch gekennzeichnet**, daß der erste Strom von Druckluft zwei Ströme von Druckluft umfaßt, die von einander gegenüberliegenden Seiten des fächerartigen Films aus geleitet werden, und der zweite Strom von Druckluft zwei Ströme von Druckluft umfaßt, die stromab vom Auftreffpunkt der ersten beiden Luftströme auf die sich ausdehnenden Ränder des fächerartigen Films geleitet werden und so die Bildung des Teilchensprühnebels unterstützen und ihn im wesentlichen begrenzen.

3. Spritzsystem nach Anspruch 2, **dadurch gekennzeichnet**, daß die beiden Ströme von Druckluft, die den ersten Strom bilden, den fächerartigen Film innerhalb eines Bruchteils von 25,4 mm (ein Inch) der luftlosen Flüssigkeitsdüse schneiden, und die beiden Ströme von Druckluft, die den zweiten Strom bilden, im wesentlichen parallel zueinander sind.

4. Spritzsystem nach Anspruch 2, **dadurch gekennzeichnet**, daß die Luftdüsenanordnung umfaßt:
einen Düsenkörper (340) mit einer Mittelöffnung (344) auf seiner Längsmittellinie, in dem die luftlose Flüssigkeitsdüse (330) angeordnet ist;
ein Paar Luftdüsen (342a,342b), die in gleichem Abstand auf einander gegenüberliegenden Seiten der Längsmittellinie des Düsenkörpers (340) angeordnet sind und sich ausdehnende erste Ströme von Druckluft auf die planen Flächen des fächerartigen Harzfilms leiten; und
ein Paar Luftöffnungen (346a,346b), die in gleichem Abstand auf einander gegenüberliegenden Seiten der Längsmittellinie des Düsenkörpers angeordnet sind und sich auf einer Linie befinden, die die Linie zwischen dem Paar Luftdüsen (342a,342b) senkrecht schneidet und die die zweiten Ströme von Druckluft auf die sich ausdehnenden Ränder des fächerartigen Harzfilms leiten,
wobei die Luftdüsen so ausgerichtet sind, daß sie die ersten Ströme von Druckluft so leiten, daß sie die Längsmittellinie des Düsenkörpers einen Bruchteil von einem Inch vor dem Düsenkörper schneiden, und
die Luftöffnungen so angeordnet sind, daß sie die zweiten Ströme von Druckluft vor den Düsenkörper und im allgemeinen parallel zu seiner Längsmittellinie leiten.

5. Spritzsystem nach Anspruch 1, wobei die Quelle von Beschichtungsmaterial umfaßt:
eine erste Quelle (311) einer ersten Komponente; und
eine zweite Quelle (312) einer zweiten Komponente,
wobei das Spritzsystem **gekennzeichnet ist durch** eine Mischeinrichtung (81,95a,318a), die die erste und die zweite Komponente mischt und ein Gemisch aus der ersten und der zweiten Komponente für die Spritzeinrichtung (14,300) erzeugt;
wobei die luftlose Flüssigkeitsdüse (330) der Spritzeinrichtung (14,300) das Gemisch aus der ersten Komponente und der zweiten Komponente zu dem fächerartigen Film mit Rändern formt, die sich von einer Flüssigkeitsöffnung aus ausdehnen.

6. Spritzsystem nach Anspruch 5, **dadurch gekennzeichnet**, daß die erste Komponente ein harzartiges Material umfaßt, und daß die zweite Komponente einen Katalysator für das harzartige Material umfaßt.

7. Spritzsystem nach Anspruch 5, **dadurch gekennzeichnet**, daß die Spritzeinrichtung eine Mischeinrichtung (81,95a,318a) stromauf von der luftlosen Flüssigkeitsdüse (330) umfaßt.

8. Spritzsystem nach Anspruch 5, **dadurch gekennzeichnet**, daß der erste Strom aus der Düsenanordnung zwei Ströme von Druckluft umfaßt, die von einander gegenüberliegenden Seiten des fächerartigen Films aus geleitet werden, und der zweite Strom von Druckluft zwei Ströme von Druckluft umfaßt, die stromab vom Auftreffpunkt der ersten beiden Luftströme auf die sich ausdehnenden Ränder des fächerartigen Films geleitet werden, und so die Bildung des Teilchensprühnebels unterstützen und ihn im wesentlichen begrenzen.

9. Spritzsystem nach Anspruch 5, **dadurch gekennzeichnet**, daß die Luftdüsenanordnung umfaßt:
einen Düsenkörper (340) mit einer Mittelöffnung (344) auf seiner Längsmittellinie, in dem die luftlose Flüssigkeitsdüse (330) angeordnet ist;
ein Paar Luftdüsen (342a,342b), die in gleichem Abstand auf einander gegenüberliegenden Seiten der Längsmittellinie des Düsenkörpers angeordnet sind und sich ausdehnende erste Ströme von Druckluft auf die planen Flächen des fächerartigen Harzfilms leiten; und
ein Paar Luftöffnungen (362a, 362b), die in gleichem Abstand auf einander gegenüberliegenden Seiten der Längsmittellinie des Düsenkörpers angeordnet sind und sich auf einer Linie befinden, die die Linie zwischen dem Paar Luftdüsen senkrecht schneidet, und die die zweiten Ströme von Druckluft auf die sich ausdehnenden Ränder des fächerartigen Harzfilms leiten,
wobei die Luftdüsen so ausgerichtet sind, daß sie die ersten Ströme von Druckluft so leiten, daß sie die Längsmittellinie des Düsenkörpers einen Bruchteil von 25,4 mm (ein Inch) vor dem Düsenkörper schneiden, und
wobei die Luftöffnungen so ausgerichtet sind, daß sie die zweiten Ströme von Druckluft vor den Düsenkörper und im allgemeinen parallel zu seiner Längsmittellinie leiten.

10. Spritzsystem nach Anspruch 5, das des weiteren eine Quelle von Lösungsmittel (25,367,368) für das Gemisch aus der ersten und der zweiten Komponente enthält, und des weiteren **gekennzeichnet durch**:
eine Einrichtung (20), die die Schläuche trägt und die erste und die zweite Komponente und das Lösungsmittel steuert, wobei die Einrichtung (20) am Körper einer Arbeitskraft gehalten und getragen werden kann und einen ersten Anschluß (41) enthält, der den ersten Schlauch trägt und einen Strom der ersten Komponente empfängt, einen zweiten Anschluß (42), der den zweiten Schlauch trägt und einen Strom der zweiten Komponente empfängt, sowie einen dritten Anschluß (44), der den dritten Schlauch trägt und einen Strom des Lösungsmittels empfängt, eine Ventileinrichtung (50) für die erste und die zweite Komponente und das Lösungsmittel, sowie einen Abgabeanschluß (43) von der Ventileinrichtung (50), der einen zusammengesetzten Strom der ersten und der zweiten Komponente bzw. des Lösungsmittels zu der Spritzeinrichtung (14,300) erzeugt.

11. Spritzsystem nach Anspruch 10, **dadurch gekennzeichnet**, daß der Abgabeanschluß und die Spritzpistole durch einen einzelnen flexiblen Schlauch miteinander verbunden sind.

12. Spritzsystem nach Anspruch 11, **dadurch gekennzeichnet**, daß der einzelne flexible Schlauch eine Mischeinrichtung für den zusammengesetzten Strom der ersten und der zweiten Komponente enthält.

13. Spritzsystem nach Anspruch 11, **dadurch gekennzeichnet**, daß der Griff der Spritzpistole eine drehbare Anschlußeinrichtung an seinem Unterteil enthält, wobei der Schlauch an die drehbare Anschlußeinrichtung angeschlossen ist, und der Spritzpistolengriff eine Mischeinrichtung für die Komponenten des Mehrkomponentenmaterials trägt.

14. Spritzsystem nach Anspruch 10, **dadurch gekennzeichnet**, daß die Ventileinrichtung (50) ein Ventil umfaßt, das mit dem ersten und dem zweiten Anschluß (41,42) für die erste und die zweite Komponente des Beschichtungsmaterials, dem Anschluß (44) für das Lösungsmittel und dem Abgabeanschluß (43) verbunden ist; wobei das Ventil (50) eine erste Position aufweist, in der der erste und der zweite Anschluß (41,42) und der Abgabeanschluß (43) miteinander verbunden sind, der Anschluß (44) für das Lösungsmittel abgesperrt ist und ein aus der ersten und der zweiten Komponente zusammengesetzter Strom zu dem Abgabeanschluß (43) möglich ist, sowie eine zweite Position, in der der erste und der zweite Anschluß (41,42) abgesperrt sind, der Lösungsmittelanschluß (43) mit dem Abgabeanschluß (44) verbunden ist und ein Strom von Lösungsmittel zu dem Abgabeanschluß möglich ist.

15. Mehrkomponenten-Spritzsystem nach Anspruch 14, **dadurch gekennzeichnet**, daß die Einrichtung (20) an einem Gürtel einer Arbeitskraft angebracht werden kann, wobei die Anschlüsse (41,42,43) die Schläuche an einer geeigneten Stelle und aus einer geeigneten Richtung aufnehmen können, und die Ventileinrichtung (50) einen sich von selbiger aus erstreckenden Griff (51) enthält, der mit einer Hand einer Arbeitskraft leicht bedient werden kann.

16. Verfahren zum Beschichten eines Gegenstandes, das die folgenden Schritte enthält:
Zuführen eines Stroms eines Beschichtungsmaterials zu einer Spritzeinrichtung;
Zuführen eines Stroms von Druckluft zu der Spritzeinrichtung;
Formen des Beschichtungsmaterials zu einem fächerartigen Film mit sich ausdehnenden Rändern, der sich von der Spritzeinrichtung aus erstreckt;
Leiten eines Stroms von Druckluft in den fächerartigen Film, um zur Bildung von Sprühnebelteilchen beizutragen; und
Leiten der Sprühnebelteilchen auf den zu beschichtenden Gegenstand, wobei das Verfahren **gekennzeichnet ist durch:**
das Leiten eines ersten Stroms von Druckluft, der den fächerartigen Film des Beschichtungsmaterials innerhalb eines Bruchteils von 25,4 mm (ein Inch) der Spritzeinrichtung schneidet; und
das Leiten von zweiten Strömen von Druckluft, die stromab vom Schnittpunkt des ersten Stroms von Druckluft und des fächerartigen Films auf die Ränder des Films auftreffen, wobei der Teilchensprühnebel aus Beschichtungsmaterial im wesentlichen auf ein Spritzmuster verringerter Größe beschränkt ist.

17. Verfahren nach Anspruch 16, **dadurch gekennzeichnet**, daß der erste Strom von Druckluft zwei Ströme umfaßt, deren Breite größer ist als ihre Tiefe und die den fächerartigen Film im wesentlichen an der gleichen Stelle von einander gegenüberliegenden Seiten aus schneiden.

18. Verfahren nach Anspruch 16, **dadurch gekennzeichnet**, daß der zweite Strom von Druckluft zwei parallele Ströme von Druckluft umfaßt, die so geleitet werden, daß sie die sich ausdehnenden Ränder des fächerartigen Films stromab vom Schnittpunkt des ersten Stroms von Druckluft schneiden, wobei der zweite Strom von Druckluft im wesentlichen parallel zu der Ebene des fächerartigen Films ist.

19. Verfahren nach Anspruch 16, **gekennzeichnet durch:**
das Teilen des ersten Stroms von Druckluft in zwei Luftströme, deren Breite größer ist als ihre Tiefe, und das Leiten der beiden Luftströme auf den fächerartigen Film des Beschichtungsmaterials von einander gegenüberliegenden Seiten des Films aus innerhalb eines Bruchteils von 25,4 mm (ein Inch) der Spritzeinrichtung; und
das Teilen des zweiten Stroms von Druckluft in zwei im wesentlichen parallele Luftstrahlen, die stromab vom Schnittpunkt der sich ausdehnenden Luftströme auf die sich ausdehnenden Ränder des fächerartigen Films geleitet werden, wobei das Gemisch zu einem Spritzmuster geformt wird, bei dem Teilchen von Beschichtungsmaterial im wesentlichen in dem Spritzmuster enthalten sind.

20. Verfahren nach Anspruch 16, wobei das Beschichtungsmaterial eine Vielzahl von Komponenten umfaßt, **gekennzeichnet durch** die folgenden Schritte:
das Zuführen eines Stroms einer ersten Beschichtungsmaterialkomponente zu einer Spritzeinrichtung;

das Zuführen eines Stroms einer zweiten Beschichtungsmaterialkomponente zu der Spritzeinrichtung; und

das Mischen der ersten Komponente und der zweiten Komponente und Formen des Gemischs aus der ersten und der zweiten Komponente zu einem fächerartigen Film mit sich ausdehnenden Rändern, der sich von der Spritzeinrichtung aus erstreckt.

21. Verfahren nach Anspruch 20, **gekennzeichnet durch:**

das Teilen des ersten Stroms von Druckluft in zwei Luftströme, deren Breite größer ist als ihre Tiefe, und das Leiten der beiden Luftströme auf den fächerartigen Film des Gemischs von einander gegenüberliegenden Seiten des Films innerhalb eines Bruchteils von 25,4 mm (ein Inch) der Spritzeinrichtung; und

das Teilen des zweiten Stroms von Druckluft in zwei im wesentlichen parallele Luftstrahlen, die stromab vom Schnittpunkt der sich ausdehnenden Luftströme auf die sich ausdehnenden Ränder des fächerartigen Films geleitet werden, wobei das Gemisch zu einem Spritzmuster geformt wird, bei dem Teilchen der miteinander vermischten ersten und zweiten Komponente im wesentlichen in dem Spritzmuster enthalten sind.

22. Verfahren nach Anspruch 21, **dadurch gekennzeichnet**, daß die erste Komponente und die zweite Komponente in der Spritzeinrichtung gemischt werden.

23. Düse zum Einsatz mit einer luftlosen Spritzdüse in einem Spritzsystem, die umfaßt:

einen Körper (340), der eine Öffnung (344) an seiner Stirnseite (343) aufweist, so daß der Körper (340) an eine luftlose Spritzdüse (330) angrenzend angeordnet werden kann, die flüssiges Material in einer Ebene vor dem Körper (340) ausstößt und eine Vielzahl von Öffnungen aufweist, die Ströme von Druckluft auf das flüssige Material leiten, **dadurch gekennzeichnet**, daß der Körper (340) eine Vielzahl von Düseneinrichtungen (397a,397b) aufweist, die Ströme von Druckluft vor den Körper in eine Richtung leiten, in der sie die Ebene von flüssigem Material, das aus der luftlosen Spritzdüse ausgestoßen wird, einen Bruchteil von 25,4 mm (ein Inch) vor der Stirnseite (343) des Körpers (340) schneiden, sowie eine Vielzahl von Einrichtungen (341c,341d), die Ströme von Druckluft im allgemeinen parallel zueinander und im allgemeinen in der Ebene des Mehrkomponentenmaterials, das aus der luftlosen Spritzdüse (330) ausgestoßen wird, vor den Körper leiten.

24. Düse nach Anspruch 23, wobei die Vielzahl von Düseneinrichtungen, die Ströme von Druckluft leiten, ein Paar Luftdüsen (342a,342b) umfassen, die auf einander gegenüberliegenden Seiten der Körperöffnung zentriert und gleichmäßig beabstandet sind, und in einem spitzen Winkel an der Stirnseite des Körpers ausgerichtet sind, wobei die Luftdüsen die Ströme von Druckluft daraus zu einem sich ausdehnenden Strom formen, dessen Breite größer ist als seine Tiefe.

25. Düse nach Anspruch 24, wobei die Vielzahl von Einrichtungen, die Ströme von Druckluft vor den Körper leiten, ein Paar Durchlasse (341c,341d) umfaßt, die auf einander gegenüberliegenden Seiten der Körperöffnung (344) zentriert und gleichmäßig beabstandet sind, und des weiteren im allgemeinen gleichmäßig von jeder des Paars von Luftdüsen (342a,342b) beabstandet sind.

**Revendications**

1. Ensemble de pulvérisation destiné à former un revêtement, comprenant :

une réserve d'une matière de revêtement (21, 22, 311, 312),

un dispositif de pulvérisation (14, 300) destiné à diriger la matière de revêtement sur un article (11, 114) qui doit être revêtu,

un dispositif (27, 322, 325) de distribution de liquide destiné à transmettre un courant de la matière de revêtement de la réserve (21, 22, 311, 312) au dispositif de pulvérisation (14, 300), et

un dispositif de distribution d'air (24, 27, 29, 319, 328, 329) destiné à transmettre un courant d'air comprimé au dispositif de pulvérisation (14, 300),

le dispositif de pulvérisation (14, 300) comprenant une buse (330) de liquide de type non pneumatique destinée à former un film liquide en éventail de la matière de revêtement ayant des bords qui s'écartent d'un orifice de liquide, et un ensemble à buse pneumatique destiné à diriger de l'air comprimé afin qu'il vienne frapper le film en éventail de la matière de revêtement et facilite la formation d'une pulvérisation de particules, caractérisé en ce que la buse pneumatique (340) dirige un premier courant d'air comprimé qui vient frapper le film en éventail (15, 331) de la matière de revêtement très près de la buse de liquide (330) et qui dirige de seconds courants d'air comprimé qui viennent frapper les bords du film en aval de l'emplacement d'incidence du premier courant d'air comprimé, le premier et les seconds courants d'air comprimé interagissant avec le film en éventail de la matière de revêtement pour faciliter l'atomisation et la capture des particules de la pulvérisation de particules.

2. Ensemble de pulvérisation selon la revendication 1, caractérisé en ce que le premier courant d'air comprimé comprend deux courants d'air comprimé dirigés à partir des côtés opposés du film en éventail, et le second courant d'air comprimé comprend deux courants d'air comprimé dirigés vers les bords qui s'écartent du film en éventail en aval de l'emplacement d'incidence des deux premiers courants d'air afin que la formation de la pulvérisation de particules et son confinement soient facilités en pratique.

3. Ensemble de pulvérisation selon la revendication 2, caractérisé en ce que les deux courants d'air comprimé formant le premier courant recoupent le film en éventail à une distance correspondant à une fraction d'une distance de 25,4 mm (1 pouce) de la buse non pneumatique de liquide, et les deux courants d'air comprimé formant le second courant sont pratiquement parallèles l'un à l'autre.

4. Ensemble de pulvérisation selon la revendication 2, caractérisé en ce que l'ensemble à buse pneumatique comporte :
    un corps de buse (340) ayant une ouverture centrale (344) sur son axe longitudinal central sur lequel est placée la buse non pneumatique de liquide (330),
    une paire de buses pneumatiques (342a, 342b) également espacées de part et d'autre de la droite longitudinale centrale du corps de buse (340) afin que les premiers courants d'air comprimé qui s'écartent soient dirigés sur des surfaces planes du film de résine en éventail, et
    deux orifices d'air (346a, 346b) régulièrement espacés de part et d'autre de l'axe longitudinal central du corps de buse et placés sur une droite qui recoupe perpendiculairement la droite passant entre les deux buses pneumatiques (342a, 342a) afin qu'ils dirigent les seconds courants d'air comprimé sur les bords qui s'écartent du film de résine en éventail,
    les buses pneumatiques étant orientées afin qu'elles dirigent les premiers courants d'air comprimé de manière qu'ils recoupent l'axe longitudinal central du corps de buse à une distance égale à une fraction d'une distance de 25,4 mm (1 pouce) en avant du corps de buse, et
    les orifices d'air sont disposés afin qu'ils dirigent les seconds courants d'air comprimé en avant du corps de buse et en direction parallèle de façon générale à son axe longitudinal central.

5. Ensemble de pulvérisation selon la revendication 1, dans lequel la réserve de la matière de revêtement comprend :
    une première réserve (311) d'un premier composant, et
    une seconde réserve (312) d'un second composant, l'ensemble de pulvérisation étant caractérisé par un dispositif (81, 95a, 318a) de mélange du premier et du second composant pour la formation d'un mélange des premier et second composants destiné au dispositif de pulvérisation (14, 300),
    la buse non pneumatique de liquide (330) du dispositif de pulvérisation (14, 300) formant le mélange du premier et du second composant dans un film en éventail ayant des bords qui s'écartent d'un orifice de liquide.

6. Ensemble de pulvérisation selon la revendication 5, caractérisé en ce que le premier composant est une matière résineuse et le second composant est un catalyseur destiné à la matière résineuse.

7. Ensemble de pulvérisation selon la revendication 5, caractérisé en ce que le dispositif de pulvérisation comprend un dispositif de mélange (81, 95a, 318a) en amont de la buse non pneumatique de liquide (330).

8. Ensemble de pulvérisation selon la revendication 5, caractérisé en ce que le premier courant provenant de l'ensemble à buse comporte deux courants d'air comprimé dirigés par les côtés opposés du film en éventail, et le second courant d'air comprimé comprend deux courants d'air comprimé dirigés vers les bords du film en éventail qui s'écartent en aval de l'emplacement d'incidence des deux premiers courants d'air afin que la formation de la pulvérisation de particules et son confinement soient assurés en pratique.

9. Ensemble de pulvérisation selon la revendication 5, caractérisé en ce que l'ensemble à buse pneumatique comprend :
    un corps de buse (340) ayant une ouverture centrale (344) sur son axe longitudinal central sur lequel est placée la buse non pneumatique de liquide (330),
    une paire de buses pneumatiques (342a, 342b) régulièrement espacées de part et d'autre de l'axe longitudinal central du corps de buse et destinées à diriger des premiers courants d'air comprimé qui s'écartent sur les surfaces planes du film de résine en éventail, et
    deux orifices pneumatiques (362a, 362b) également espacés sur les côtés opposés de l'axe longitudinal central du corps de buse et placés sur une droite qui recoupe perpendiculairement la droite passant entre les deux buses pneumatiques afin qu'ils dirigent les seconds courants d'air comprimé sur les bords du film de résine en éventail qui s'écartent,
    les buses pneumatiques ayant une orientation telle qu'elles dirigent les premiers courants d'air comprimé afin qu'ils recoupent l'axe longitudinal central du corps de buse à une distance qui est une fraction d'une distance de 25,4 mm (1 pouce) en avant du corps de buse, et
    les orifices d'air étant disposés afin qu'ils dirigent les seconds courants d'air comprimé vers l'avant du corps de buse et en direction parallèle de façon générale à son axe longitudinal central.

10. Ensemble de pulvérisation selon la revendication 5, comprenant en outre une réserve d'un solvant (25, 367, 368) du mélange des premier et second composants, caractérisé en outre par :

un dispositif (20) de support de tubes souples et de réglage du premier et du second composant et du solvant, le dispositif (20) étant destiné à être supporté et transporté sur le corps d'un ouvrier et comprenant une première connexion (41) destinée à porter un premier tube souple et à recevoir un courant du premier composant, une seconde connexion (42) destinée à porter le second tube souple et à recevoir un courant du second composant, et une troisième connexion (44) destinée à porter le troisième tube souple et à recevoir un courant de solvant, un dispositif à soupape (50) destiné aux premier et second composants et au solvant, et une connexion de sortie (43) du dispositif à soupape (50) étant destinée à transmettre un courant combiné du premier et du second composant ou du solvant au dispositif de pulvérisation (14, 300).

11. Ensemble de pulvérisation selon la revendication 10, caractérisé en ce que la connexion de sortie et le pistolet de pulvérisation sont raccordés par un seul tube souple.

12. Ensemble de pulvérisation selon la revendication 11, caractérisé en ce que le tube souple unique comporte un dispositif de mélange de courants combinés des premier et second composants.

13. Ensemble de pulvérisation selon la revendication 11, caractérisé en ce que la poignée du pistolet de pulvérisation comporte un dispositif rotatif de raccordement à sa base, le tube souple est raccordé au dispositif rotatif de raccordement, et la poignée du pistolet de pulvérisation porte un dispositif de mélange des différents composants de la matière.

14. Ensemble de pulvérisation selon la revendication 10, caractérisé en ce que le dispositif à soupape (50) possède une soupape raccordée aux première et seconde connexions (41, 42) destinées aux premier et second composants de la matière de revêtement, la connexion (44) destinée au solvant et la connexion de sortie (43), la soupape (50) ayant une première position d'interconnexion des première et seconde connexions (41, 42) et de la connexion de sortie (43) avec fermeture de la connexion (44) du solvant et possibilité de circulation du premier et du second composant combinés vers la connexion de sortie (43), et une seconde position de fermeture de la première et de la seconde connexion (41, 42) et de connexion de la connexion de solvant (43) à la connexion de sortie (44), permettant la circulation du solvant vers la connexion de sortie.

15. Ensemble de pulvérisation de plusieurs composants selon la revendication 14, caractérisé en ce que ledit dispositif (20) est destiné à être fixé à la ceinture d'un ouvrier, les connexions (41, 42, 43) sont destinées à loger des tubes souples à un emplacement commode et dans une direction commode, et le dispositif à soupape (50) possède une poignée (51) qui dépasse afin qu'elle puisse être manipulée facilement par la main d'un ouvrier.

16. Procédé de revêtement d'un article, comprenant les étapes suivantes :

la distribution d'un courant d'une matière de revêtement à un dispositif de pulvérisation,

la distribution d'un courant d'air comprimé au dispositif de pulvérisation,

la formation de la matière de revêtement sous forme d'un film en éventail ayant des bords qui s'écartent à partir du dispositif de pulvérisation,

la projection d'un courant d'air comprimé vers le film en éventail afin que la formation des particules de la pulvérisation soit facile, et

la projection des particules de la pulvérisation sur l'article à revêtir, le procédé étant caractérisé par :

la projection d'un premier courant d'air comprimé qui recoupe le film en éventail de la matière de revêtement à une distance inférieure à une fraction de 25,4 mm (1 pouce) du dispositif de pulvérisation, et

la projection de seconds courants d'air comprimé qui viennent frapper les bords du film en aval de l'intersection du premier courant d'air comprimé et du film en éventail, la pulvérisation de particules de la matière de revêtement étant pratiquement confinée dans un diagramme de pulvérisation de dimension réduite.

17. Procédé selon la revendication 16, caractérisé en ce que le premier courant d'air comprimé comporte deux courants ayant une largeur supérieure à la profondeur et recoupant le film en éventail pratiquement suivant le même lieu à partir des côtés opposés.

18. Procédé selon la revendication 16, caractérisé en ce que le second courant d'air comprimé comporte deux courants parallèles d'air comprimé dirigés afin qu'ils recoupent les bords qui s'écartent du film en éventail en aval de l'intersection du premier courant d'air comprimé, le second courant d'air comprimé étant pratiquement parallèle au plan du film en éventail.

19. Procédé selon la revendication 16, caractérisé par la division du premier courant d'air comprimé en deux courants d'air ayant une largeur supérieure à la profondeur, et la projection des deux courants d'air sur le film en éventail de la matière de revêtement à partir des côtés opposés du film à une distance qui est une fraction d'une distance de 25,4 mm (1 pouce) par rapport au dispositif de pulvérisation, et

la division du second courant d'air comprimé en deux jets d'air pratiquement parallèles dirigés sur les bords du film en éventail qui s'écartent en aval de l'intersection des courants d'air qui s'écartent, le mélange étant formé avec un diagramme de pulvérisation comprenant des particules de matière de revêtement pratiquement contenues dans le diagramme de pulvérisation.

20. Procédé selon la revendication 16, dans lequel la matière de revêtement comprend plusieurs composants, caractérisé par les étapes suivantes :

la distribution d'un courant d'un premier composant de la matière de revêtement à un dispositif de pulvérisation,

la distribution d'un courant d'un second composant de la matière de revêtement au dispositif de pulvérisation, et

le mélange du premier composant et du second composant et la formation d'un film en éventail avec le premier et le second composant, le film ayant des bords qui s'écartent à partir du dispositif de pulvérisation.

21. Procédé selon la revendication 20, caractérisé par :

la division du premier courant d'air comprimé en deux courants d'air ayant une largeur supérieure à la profondeur, et la projection des deux courants d'air sur le film en éventail du mélange à partir des côtés opposés du film à une distance qui est une fraction de 25,4 mm (1 pouce) du dispositif de pulvérisation, et

la division du second courant d'air comprimé en deux jets d'air pratiquement parallèles dirigés sur les bords du film en éventail qui s'écartent en aval de l'intersection des courants d'air qui s'écartent, le mélange étant formé avec un diagramme de pulvérisation dans lequel des particules du premier et du second composant mélangés sont pratiquement contenues dans le diagramme de pulvérisation.

22. Procédé selon la revendication 21, caractérisé en ce que le premier composant et le second composant sont mélangés dans le dispositif de pulvérisation.

23. Buse destinée à être utilisée avec une buse de pulvérisation non pneumatique dans un ensemble de pulvérisation, comprenant :

un corps (340) formant une ouverture (344) dans sa face (343) afin que le corps (340) puisse être placé près d'une buse (330) de pulvérisation non pneumatique destinée à projeter une matière liquide dans un plan qui se trouve en avant du corps (340) et formant plusieurs ouvertures destinées à diriger des courants d'air comprimé sur la matière liquide, caractérisée en ce que le corps (340) a plusieurs dispositifs à buse (397a, 397b) destinés à diriger les courants d'air comprimé en avant du corps en direction recoupant le plan de la matière liquide projetée par la buse non pneumatique de pulvérisation à une distance qui est une fraction de 25,4 mm (1 pouce) en avant de la face (343) du corps (340), et plusieurs dispositifs (341c, 341d) destinés à diriger les courants d'air comprimé en avant du corps, en direction générale parallèle l'un à l'autre et dans le plan de la matière à plusieurs composants projetée par la buse non pneumatique de pulvérisation (330) de manière générale.

24. Buse selon la revendication 23, dans laquelle les dispositifs à buses destinés à diriger les courants d'air comprimé comprennent une paire de buses pneumatiques (342a, 342b) centrées sur les côtés opposés de l'ouverture du corps, également espacées sur ces côtés et orientées suivant un angle aigu par rapport à la face du corps, les buses pneumatiques créant les courants d'air comprimé qui en proviennent afin qu'ils forment un courant qui s'écarte, possédant une largeur plus grande que la profondeur.

25. Buse selon la revendication 24, dans laquelle les dispositifs destinés à diriger les courants d'air comprimé en avant du corps comprennent une paire de passages (341c, 341d) centrés sur l'ouverture (344) du corps et également espacés de part et d'autre de cette ouverture, et séparés par des distances égales de façon générale de chacune des deux buses pneumatiques (342a, 342b).

Fig-1-

FIG_2

FIRST COMP. 21 26

PUMP 31 36

27

SECOND COMP. 22 27

PUMP 32 37

SOLVENT 25 28

PUMP 33 38

COMP. AIR 24 29

CONTROL 34

41 42 44 51 20 45 50 43

23

14 14d 14c 14b 14a 15

11

35

EP 0 470 181 B1

FIG_3

*FIG_4A_*

*FIG_4B_*

FIG. 5.

EP 0 470 181 B1

FIG - 6 -

FIG-7

EP 0 470 181 B1

FIG_8_

FIG_9_

FIG_10_

FIG_11A

395a  343
341c  346a
j
331  e
R
346
341d  318
340

FIG_12

IIB
394  340
395d
342a
IIA  344a  344  346a  IIA
346b  344b
396a  342b
IIB

FIG_11B

394  395a  397a
340
342a
330
396a
c
a
342b
397b